# EUROPEAN PATENT APPLICATION

(11) **EP 4 826 285 A1**
(43) Date of publication of application: **21.10.2026**
(21) Application number: 24916624.0
(22) Date of filing: 05.12.2024
(51) Int. Cl.: F16L 37/32

(54) **WATER PURIFIER**

(30) Priority: 09.01.2024 CN 202420052862 U
(71) Applicant: Jiangsu Kingclean Intelligent Appliance Co., Ltd., Suzhou, Jiangsu 215129 (CN); Kingclean Electric Green Technology (Suzhou) Co., Ltd., Suzhou, Jiangsu 215000 (CN); KingClean Electric Co., Ltd., Suzhou New District Suzhou Jiangsu 215163 (CN)
(72) Inventor: ZHANG, Lei, Suzhou, Jiangsu 215163 (CN); ZHOU, Yu, Suzhou, Jiangsu 215163 (CN); ZHAO, Renbei, Suzhou, Jiangsu 215163 (CN); GAO, Le, Suzhou, Jiangsu 215163 (CN); XUE, Tingfeng, Suzhou, Jiangsu 215163 (CN)
(74) Representative: Wang, Bo
(86) International application number: PCT/CN2024/137078
(87) International publication number: WO 2025/148577

(57) **Abstract**

The present disclosure relates to a water purifier. The water purifier comprises a liquid reservoir, a first valve assembly and a liquid storage member, wherein the liquid reservoir is provided with a first connecting pipe in communication with an inner cavity of the liquid reservoir, and the liquid storage member is provided with a second connecting base in communication with an inner cavity of the liquid storage member, the first valve assembly comprises a first valve core and a sealing ring which are located within the first connecting pipe,and the first valve core is configured to open or close the first valve assembly correspondingly when the second connecting base is inserted into or removed from the first connecting pipe; the sealing ring fits with the first connecting pipe in a sealing manner at one end, and is provided with a fitting portion at the other end, and the fitting portion is movably sleeved on the first valve core; and the first connecting pipe, the first valve core and the sealing ring together form an accommodating space which is in communication with the inner cavity of the liquid reservoir when the first valve assembly is opened. The water purifier of the present application can prevent water leakage during removal of the liquid storage member.

## Description

### TECHNICAL FIELD

The present disclosure relates to the technical field of water purification, and in particular to a water purifier.

### BACKGROUND

With the improvement of people's living standards, a growing number of individuals are seeking a high-quality life, and a water purifier has undoubtedly become one of the best choices. In related technologies, the water purifier may include a liquid storage unit and a liquid reservoir, where a water inlet of the liquid storage unit is detachably connected to a water supply interface of a water storage device (such as the liquid reservoir) via a plug-and-pull fit. However, when users perform plugging or unplugging operations on the liquid storage unit, water leakage often occurs at the connection between the water inlet of the liquid storage unit and the water supply interface of the water storage device, resulting in a poor user experience. In cases where the liquid reservoir and the liquid storage unit are a raw water tank or a raw water tank base, after the two are separated, issues such as water retention at an edge of the valve core of the raw water tank base or water dripping from the raw water tank may also arise.

### SUMMARY

One or more embodiments of the present disclosure provide a water purifier, which can avoid water leakage when taking out the liquid storage unit, thereby improving the user experience.

In order to achieve the above objective, in a first aspect, a water purifier provided by an embodiment of the present disclosure comprises a liquid reservoir, a first valve assembly, and a liquid storage unit;

The liquid reservoir is provided with a first connecting tube in communication with an inner cavity of the liquid reservoir, and the liquid storage unit is provided with a second connector in communication with an inner cavity of the liquid storage unit;

The first valve assembly includes a first valve core and a sealing ring located in the first connecting tube, and the first valve core is configured to open or close the first valve assembly when the second connector is inserted into or pulled out of the first connecting tube;

One end of the sealing ring is sealingly engaged with the first connecting tube, the other end of the sealing ring is provided with a mating portion, the mating portion is movably sleeved on the first valve core, and the first connecting tube, the first valve core, and the sealing ring together form an accommodating space, and the accommodating space is in communication with the inner cavity of the liquid reservoir when the first valve assembly is open.

In one embodiment, the first valve core is provided with a sealing member, and the sealing member is configured to sealingly cooperate with the mating portion.

In one embodiment, the water purifier further includes a second valve assembly disposed in the second connector;

The second valve assembly includes a driving member, and when the second connector is detached from the first connecting tube, the sealing member sealingly cooperates with the mating portion;

When the second connector is inserted into the first connecting tube, the driving member presses against the mating portion and drives the mating portion to disengage from the sealing member, so that the second connector is in communication with the inner cavity of the liquid reservoir through the accommodating space.

In one embodiment, the sealing ring is configured as an elastic member, the mating portion is capable of moving along a first direction under the driving of the driving member, or elastically resetting along a second direction opposite to the first direction, so that a volume of the accommodating space becomes smaller or larger, wherein the first direction is an insertion direction in which the second connector is inserted into the first connecting tube.

In one embodiment, the second valve assembly includes a second valve seat and a second valve core passing through the second valve seat, the second valve seat is connected in the second connector, the second valve core is capable of moving relative to the second connector toward a second direction, or elastically resetting toward a first direction opposite to the second direction, to open or close a valve port of the second valve seat; and the second valve seat forms the driving member;

The second direction is a withdrawal direction in which the second connector is pulled out relative to the first connecting tube.

In one embodiment, a setting position of the second valve seat corresponds to a setting position of the mating portion, a setting position of the second valve core corresponds to a setting position of the first valve core, a state where the second connector is located in the first connecting tube and the second valve seat just contacts the mating portion is designated as an initial state, and in the initial state, there is a gap between the first valve core and the second valve core, or the first valve core and the second valve core contact each other and do not transmit force to each other.

In one embodiment, the mating portion is in clearance fit with the first valve core, and the sealing member seals an end surface of the mating portion facing the second valve core.

In one embodiment, the first valve core includes a first valve core body and a plurality of first ribs, the plurality of first ribs are arranged at intervals and around a peripheral surface of the first valve core body, the sealing member is provided at an end of the first valve core body away from the inner cavity of the liquid reservoir and is connected to each first rib.

In one embodiment, the first valve core includes a first valve core body and a plurality of first ribs, the plurality of first ribs are arranged at intervals and around a peripheral surface of the first valve core body; the mating portion is configured as an annular member, is sleeved on an outer peripheral side of each first rib, and is in clearance fit with the outer peripheral side of each first rib, and an inner diameter of the mating portion is less than 7 mm.

In one embodiment, the mating portion and the sealing member are both configured as annular members.

In one embodiment, the sealing member is configured as a disc-shaped structure, and an outer diameter of the sealing member is greater than an inner diameter of the mating portion.

In one embodiment, the sealing ring includes an annular main body portion and a necking portion, both the necking portion and the mating portion are disposed around an outer side of the first valve core, one end of the necking portion is connected to the main body portion, and the other end of the necking portion is connected to the mating portion.

In one embodiment, both the necking portion and the mating portion are located inside the main body portion; or
the main body portion, the necking portion, and the mating portion are arranged sequentially along the second direction.

In one embodiment, an end of the main body portion away from the necking portion is provided with a first flanging portion that is folded outward, an outer peripheral surface of the main body portion presses against an inner wall of the first connecting tube, and the first flanging portion is sleeved on an end of the first connecting tube away from the liquid reservoir.

In one embodiment, the water purifier further includes a housing, the liquid reservoir is connected to the housing, the housing is provided with a connecting pipe through which the first connecting tube is inserted, an end of the connecting pipe is provided with a second flanging portion that is folded inward, and the second flanging portion presses the first flanging portion tightly against the end of the first connecting tube away from the liquid reservoir.

In one embodiment, an inner diameter of the mating portion is less than or equal to an inner diameter of the second valve seat; and projections of surfaces of the mating portion and the second valve seat that face each other on a plane perpendicular to the first direction have an overlapping portion.

In one embodiment, an outer diameter of the second connector is less than an inner diameter of the main body portion; an annular protruding portion is provided inside the main body portion, and when the second connector is inserted into the first connecting tube, the protruding portion presses against an outer wall of the second connector.

In one embodiment, surfaces of the mating portion and the second valve seat facing each other are designated as a first surface and a second surface, respectively;

In the initial state, an end of the first valve core away from the inner cavity of the liquid reservoir protrudes beyond the first surface;
A distance D1 between an end surface of the first valve core facing the second valve core and the first surface and a distance D2 between an end surface of the second valve core facing the first valve core and the second surface satisfy: D1 < D2.

In one embodiment, an end surface of the mating portion away from the first surface is designated as a third surface;
A first step portion that is locally protruding is provided between two ends of the first valve core, and the first step portion is configured to block a moving path of the mating portion along the first direction;
The first step portion includes a first step surface extending radially along the first valve core, and the first step surface is arranged opposite to the third surface;
A distance D3 between an end surface of the first valve core facing the second valve core and the first step surface and a thickness dimension D4 of the mating portion along the first direction satisfy: D3 > D4.

In one embodiment, the first valve assembly further includes a first valve seat, the first valve core passes through the first valve seat, the first valve seat is connected inside the first connecting tube, the first valve core is capable of moving relative to the first valve seat along a first direction, or elastically resetting along a second direction opposite to the first direction, to open or close a valve port of the first valve seat, and the first direction is an insertion direction in which the second connector is inserted into the first connecting tube.

In one embodiment, the first valve seat includes a first valve seat body, the first valve seat body is configured with a first accommodation chamber with openings at both ends, and the opening facing the inner cavity of the liquid reservoir forms the valve port of the first valve seat; the first valve core passes through the first accommodation chamber and is in guiding cooperation with a wall of the first accommodation chamber, and a first sealing end of the first valve core enters the inner cavity of the liquid reservoir through the valve port of the first valve seat.

In one embodiment, the first valve assembly further includes a first elastic member, the first elastic member is disposed between an inner wall of the first valve seat and the first valve core, and is configured to apply an elastic force toward the second direction to the first valve core, continuously.

In one embodiment, an outer surface of the first valve core is provided with at least one second step portion, and two ends of the first elastic member press between the inner wall of the first valve seat and the at least one second step portion, respectively.

In one embodiment, the second valve seat includes a second valve seat body, the second valve seat body is configured with a second accommodation chamber with openings at both ends, and the opening away from the inner cavity of the liquid storage unit forms the valve port of the second valve seat; the second valve core passes through the second accommodation chamber and is in guiding cooperation with a wall of the second accommodation chamber, and a second sealing end of the second valve core seals the valve port of the second valve seat when moving along the first direction.

In one embodiment, an edge of the valve port of the second valve seat is provided with a third flanging portion that is folded inward, and the third flanging portion is configured to stop and cooperate with the second sealing end of the second valve core.

In one embodiment, the second valve assembly further includes a second elastic member, the second elastic member is disposed between an inner wall of the second valve seat and the second sealing end of the second valve core, and is configured to apply an elastic force toward the first direction to the second valve core, continuously.

In one embodiment, an outer wall of the liquid storage unit is configured with a mounting chamber in communication with the inner cavity of the liquid storage unit, and the second connector is installed in the mounting chamber.

In one embodiment, the liquid reservoir is a communicating vessel, and the liquid storage unit is a clean water tank; or, the liquid reservoir is a raw water tank base, and the liquid storage unit is a raw water tank; or, the liquid reservoir is a raw water tank, and the liquid storage unit is a raw water tank base.

In one embodiment, the liquid reservoir is a communicating vessel, and the liquid storage unit is a clean water tank; the water purifier further includes: a filter and a water pump, the filter is in communication with the inner cavity of the communicating vessel, and the water pump draws water from the clean water tank through the communicating vessel; the water purifier further includes a level box, the communicating vessel is in communication with the level box, and when the water pump draws water, the water in the level box and the clean water tank both decreases.

In one embodiment, the water purifier further includes a filter; the liquid reservoir is a raw water tank base, and the liquid storage unit is a raw water tank, and the raw water tank base is configured to provide raw water from the raw water tank to the filter.

Advantageous effects of the water purifier:
One end of the sealing ring is in sealing cooperation with the first connecting tube, and the other end of the sealing ring is provided with a mating portion. The mating portion is movably sleeved on the first valve core. The first connecting tube, the first valve core, and the sealing ring together form an accommodating space. Consequently, when the second connector is not inserted into the first connecting tube, water leaking from the side of the liquid reservoir can be temporarily stored in the accommodating space, effectively preventing water from leaking out of the first connecting tube.

In a second aspect, the present disclosure provides a water purifier, comprising a liquid reservoir, a liquid storage unit, a first valve assembly, and a second valve assembly.

The liquid reservoir is provided with a first connecting tube in communication with an inner cavity of the liquid reservoir. The liquid storage unit is provided with a second connector in communication with an inner cavity of the liquid storage unit.

The first valve assembly includes a sealing ring and a first valve core that reciprocates along a length direction of the first connecting tube to open or close the inner cavity of the liquid reservoir. The second valve assembly includes a second valve seat and a second valve core provided on the second valve seat. The second valve core reciprocates along a length direction of the second connector to open or close the inner cavity of the liquid storage unit.

One end of the sealing ring is sealingly engaged with the first connecting tube, and the other end of the sealing ring is provided with a mating portion. The mating portion is movably sleeved on a periphery of the first valve core.

A setting position of the second valve seat corresponds to a setting position of the mating portion. A setting position of the second valve core corresponds to a setting position of the first valve core. A state where the second connector is located in the first connecting tube and the second valve seat just contacts the mating portion is designated as an initial state. In the initial state, there is a gap between the first valve core and the second valve core, or the first valve core and the second valve core contact each other and do not transmit force to each other.

In one embodiment, the first valve assembly further includes a first valve seat. The first valve core is inserted through the first valve seat. The first valve seat is connected to the first connecting tube. The first valve core is configured to move relative to the first valve seat along a first direction, or elastically reset along a second direction opposite to the first direction, to open or close a valve port of the first valve seat. The first direction is an insertion direction in which the second connector is inserted into the first connecting tube.

In one embodiment, the second valve core is configured to move relative to the second valve seat toward a second direction, or elastically reset toward a first direction, to open or close a valve port of the second valve seat.

In one embodiment, the mating portion is in clearance fit with the first valve core.

In one embodiment, the first valve core includes a first valve core body and a plurality of first ribs. The plurality of first ribs are arranged at intervals and around a peripheral surface of the first valve core body. The mating portion is configured as an annular member, is sleeved on an outer peripheral side of each first rib, and is in clearance fit with the outer peripheral side of each first rib. An inner diameter of the mating portion is less than 7 mm.

In one embodiment, the first connecting tube, the first valve core, and the sealing ring together form an accommodating space.

The sealing ring is configured as an elastic member. The mating portion is configured to move along a first direction under driving of the second valve seat, or elastically reset along a second direction, to reduce or increase a volume of the accommodating space.

In one embodiment, the sealing ring includes an annular main body portion and a necking portion. The necking portion and the mating portion are disposed around an outer side of the first valve core. One end of the necking portion is connected to the main body portion, and the other end of the necking portion is connected to the mating portion.

In one embodiment, the necking portion and the mating portion are both located on an inner side of the main body portion; or
the main body portion, the necking portion, and the mating portion are arranged in sequence along the second direction.

In one embodiment, an end of the main body portion away from the necking portion is provided with a first flanging portion that is folded outward. A peripheral surface of the main body portion presses against an inner wall of the first connecting tube. The first flanging portion is sleeved on an end of the first connecting tube away from the liquid reservoir.

In one embodiment, the water purifier further includes a housing. An end of the housing is provided with a second flanging portion that is folded inward. The second flanging portion presses the first flanging portion tightly against the end of the first connecting tube away from the liquid reservoir.

In one embodiment, an inner diameter of the mating portion is less than or equal to an inner diameter of the second valve seat. Further, projections of surfaces of the mating portion and the second valve seat that face each other on a plane perpendicular to the first direction have an overlapping portion.

In one embodiment, an outer diameter of the second connector is less than an inner diameter of the main body portion. An annular protruding portion is provided on an inner side of the main body portion. When the second connector is inserted into the first connecting tube, the protruding portion presses against an outer wall of the second connector.

In one embodiment, opposite surfaces of the mating portion and the second valve seat are designated as a first surface and a second surface, respectively. In the initial state, an end of the first valve core away from the inner cavity of the liquid reservoir protrudes beyond the first surface.

A distance D1 between an end surface of the first valve core facing the second valve core and the first surface and a distance D2 between an end surface of the second valve core facing the first valve core and the second surface satisfy: D1 < D2.

In one embodiment, an end surface of the mating portion away from the first surface is designated as a third surface.

A first step portion that is partially protruding is provided between two ends of the first valve core. The first step portion is configured to block a moving path of the mating portion along the first direction. The first step portion includes a first step surface extending radially along the first valve core. The first step surface is arranged opposite to the third surface. A distance D3 between the end surface of the first valve core facing the second valve core and the first step surface and a thickness dimension D4 of the mating portion along the first direction satisfy: D3 > D4.

In one embodiment, the first valve seat includes a first valve seat body. The first valve seat body is configured with a first accommodation chamber with openings at two ends. The opening facing the inner cavity of the liquid reservoir forms the valve port of the first valve seat.

The first valve core passes through the first accommodation chamber and is in guiding fit with a wall of the first accommodation chamber. A first sealing end of the first valve core enters the inner cavity of the liquid reservoir through the valve port of the first valve seat.

In one embodiment, the first valve assembly further includes a first elastic member, the first elastic member is arranged between an inner wall of the first valve seat and the first valve core, and is configured to apply an elastic force toward the second direction to the first valve core, continuously.

In one embodiment, an outer surface of the first valve core is provided with at least one second step portion, and two ends of the first elastic member press between the inner wall of the first valve seat and the at least one second step portion, respectively.

In one embodiment, the second valve seat includes a second valve seat body, the second valve seat body is configured with a second accommodation chamber with openings at both ends, and the opening away from an inner cavity of the liquid storage unit forms a valve port of the second valve seat;
The second valve core passes through the second accommodation chamber and is in guiding cooperation with a wall of the second accommodation chamber, and a second sealing end of the second valve core seals the valve port of the second valve seat when moving along the first direction.

In one embodiment, the second valve assembly further includes a second elastic member, the second elastic member is arranged between an inner wall of the second valve seat and a second sealing end of the second valve core, and is configured to continuously apply an elastic force toward the first direction to the second valve core;
The first valve assembly further includes a first elastic member, the first elastic member is arranged between an inner wall of the first valve seat and the first valve core, and is configured to continuously apply an elastic force toward the second direction to the first valve core; an elastic coefficient of the second elastic member is less than an elastic coefficient of the first elastic member.

In one embodiment, an outer wall of the liquid storage unit is configured with a mounting chamber in communication with an inner cavity of the liquid storage unit, and the second connector is installed in the mounting chamber.

In one embodiment, the liquid reservoir communicates with atmosphere, and a water level sensor for detecting a water level is provided in the liquid reservoir.

In one embodiment, the first connecting tube, the first valve core, and the sealing ring together form an accommodating space, and the accommodating space communicates with an inner cavity of the liquid reservoir when the first valve assembly is open.

In one embodiment, a sealing member is provided on the first valve core, and the sealing member is configured to sealingly cooperate with the mating portion to seal the accommodating space.

In one embodiment, the liquid reservoir is a level box, and the liquid storage unit is a clean water tank; or, the liquid reservoir is a raw water tank base, and the liquid storage unit is a raw water tank; or, the liquid reservoir is a raw water tank, and the liquid storage unit is a raw water tank base.

Beneficial effects of the above water purifier: by having one end of the sealing ring sealingly engaged with the first connecting tube and the other end provided with the mating portion, and the mating portion movably sleeved on the periphery of the first valve core, the mating portion is movable relative to the first valve core along a length direction of the first connecting tube; a setting position of the second valve seat corresponds to a setting position of the mating portion; when the second connector is inserted into the first connecting tube and the second valve seat just contacts the mating portion, there is a gap between the first valve core and the second valve core, or the first valve core and the second valve core contact each other without transmitting force. With such a configuration, since one end of the sealing ring is sealingly engaged with the first connecting tube, when the second connector is inserted into the first connecting tube and the second valve seat just contacts the mating portion, it contacts the mating portion to form a seal; at this moment, there is a gap between the first valve core and the second valve core, and the two are not in contact, or the first valve core and the second valve core contact each other without transmitting force; thus, both the first valve assembly and the second valve assembly are in a closed state; as the insertion of the second connector deepens, the mating portion is pushed by the second valve seat to move relative to the first valve core in the insertion direction and undergoes elastic deformation, causing the second valve seat and the mating portion to press tightly and maintain a sealed state; during this process, regardless of whether the first valve assembly and the second valve assembly are opened, water inside the first valve assembly and the second valve assembly cannot leak out from the junction between the mating portion and the second valve seat; therefore, no water leakage occurs during the entire insertion process of the second connector.

In a third aspect, the present disclosure provides a water purifier, comprising:
A liquid reservoir, comprising: a first connecting tube, a first valve assembly, and a sealing ring; the first valve assembly is installed on the first connecting tube; the first valve core includes a first sealing end and an opposite end arranged opposite to the first sealing end; one end of the sealing ring is in sealing cooperation with the first connecting tube, the other end of the sealing ring is provided with a mating portion, and the mating portion is movably sleeved on a periphery of the opposite end;
A liquid storage unit, detachably installed on the liquid reservoir;
Wherein the first valve core, the first connecting tube, and the sealing ring together form an accommodating space; when the liquid storage unit is not installed on the liquid reservoir, the mating portion is located at the opposite end, the first valve assembly is closed, the first sealing end is closed, and an inner cavity of the liquid reservoir is disconnected from the accommodating space.

In one embodiment, when the liquid storage unit is installed on the liquid reservoir, the mating portion is located between the opposite end and the first sealing end, the first valve assembly is open, the first sealing end is open, and an inner cavity of the liquid reservoir communicates with the accommodating space.

In one embodiment, the liquid storage unit is provided with a second connector in communication with an inner cavity of the liquid storage unit, the first valve core is configured to open or close the first valve assembly while the second connector is inserted into or pulled out of the first connecting tube; the water purifier further includes a second valve assembly provided in the second connector;
The second valve assembly includes a driving member, and when the second connector is inserted into the first connecting tube, the driving member presses against the mating portion and drives the mating portion to detach from the opposite end, so that the second connector communicates with an inner cavity of the liquid reservoir through the accommodating space.

In one embodiment, the sealing ring is configured as an elastic member, the mating portion is movable along a first direction under driving of the driving member, or elastically resets along a second direction opposite to the first direction, to reduce or increase a volume of the accommodating space, and the first direction is an insertion direction in which the second connector is inserted into the first connecting tube.

In one embodiment, the second valve assembly includes a second valve seat and a second valve core disposed through the second valve seat, the second valve seat is connected inside the second connector, the second valve core is movable relative to the second connector toward a second direction, or elastically resets toward a first direction opposite to the second direction, to open or close a valve port of the second valve seat; the second valve seat forms the driving member;
The second direction is a withdrawal direction in which the second connector is pulled out relative to the first connecting tube.

In one embodiment, a setting position of the second valve seat corresponds to a setting position of the mating portion, a setting position of the second valve core corresponds to a setting position of the first valve core, a state where the second connector is located in the first connecting tube and the second valve seat just contacts the mating portion is designated as an initial state, and in the initial state, there is a gap between the first valve core and the second valve core, or the first valve core and the second valve core contact each other and do not transmit force to each other.

In one embodiment, a sealing member is provided on the opposite end of the first valve core, and the sealing member is configured to sealingly cooperate with the mating portion;
When the liquid storage unit is not installed on the liquid reservoir, the second connector is detached from the first connecting tube, and the sealing member sealingly cooperates with the mating portion.

In one embodiment, the mating portion is in clearance fit with the first valve core, and the sealing member seals against an end surface of the mating portion facing the second valve core.

In one embodiment, the first valve core includes a first valve core body and a plurality of first ribs. The plurality of first ribs are arranged at intervals and around a peripheral surface of the first valve core body. The sealing member is provided at an end of the first valve core body away from the inner cavity of the liquid reservoir and is connected to each first rib.

In one embodiment, both the mating portion and the sealing member are configured as annular members.

In one embodiment, the sealing member is configured as a disc-shaped structure. An outer diameter of the sealing member is greater than an inner diameter of the mating portion to seal the accommodating space.

In one embodiment, the first valve core includes a first valve core body and a plurality of first ribs. The plurality of first ribs are arranged at intervals and around a peripheral surface of the first valve core body. The mating portion is configured as an annular member, is sleeved on an outer peripheral side of each first rib, and is in clearance fit with the outer peripheral side of each first rib. An inner diameter of the mating portion is less than 7 mm.

In one embodiment, the sealing ring includes an annular main body portion and a necking portion. Both the necking portion and the mating portion are disposed around an outer side of the first valve core. One end of the necking portion is connected to the main body portion, and the other end of the necking portion is connected to the mating portion.

In one embodiment, both the necking portion and the mating portion are located inside the main body portion; or,
the main body portion, the necking portion, and the mating portion are arranged sequentially along the second direction.

In one embodiment, an end of the main body portion away from the necking portion is provided with a first flanging portion that is folded outward. A peripheral surface of the main body portion presses against an inner wall of the first connecting tube. The first flanging portion is sleeved on an end of the first connecting tube away from the liquid reservoir.

In one embodiment, the water purifier further includes a housing. The liquid reservoir is connected to the housing. The housing is provided with a connecting pipe through which the first connecting tube is inserted. An end of the connecting pipe is provided with a second flanging portion that is folded inward. The second flanging portion presses the first flanging portion tightly against the end of the first connecting tube away from the liquid reservoir.

In one embodiment, an inner diameter of the mating portion is less than or equal to an inner diameter of the second valve seat; and projections of surfaces of the mating portion and the second valve seat facing each other on a plane perpendicular to the first direction have an overlapping portion.

In one embodiment, an annular protruding portion is provided inside the main body portion. When the second connector is inserted into the first connecting tube, the protruding portion presses against an outer wall of the second connector. When the second connector is inserted into the first connecting tube, at least a portion of the second connector is located between the mating portion and the main body portion.

In one embodiment, surfaces of the mating portion and the second valve seat facing each other are respectively designated as a first surface and a second surface. In the initial state, an end of the first valve core away from the inner cavity of the liquid reservoir protrudes beyond the first surface.

A distance D1 between an end surface of the first valve core facing the second valve core and the first surface and a distance D2 between an end surface of the second valve core facing the first valve core and the second surface satisfy: D1 < D2.

In one embodiment, an end surface of the mating portion away from the first surface is designated as a third surface. A first step portion that is partially protruding is provided between two ends of the first valve core. The first step portion is configured to block a moving path of the mating portion along the first direction.

The first step portion includes a first step surface extending radially along the first valve core. The first step surface is arranged opposite to the third surface.

A distance D3 between an end surface of the first valve core facing the second valve core and the first step surface and a thickness dimension D4 of the mating portion along the first direction satisfy: D3 > D4.

In one embodiment, the first valve assembly further includes a first valve seat. The first valve core passes through the first valve seat. The first valve seat is connected to the first connecting tube. The first valve core is capable of moving relative to the first valve seat along a first direction, or elastically resetting along a second direction opposite to the first direction, to open or close a valve port of the first valve seat. The first direction is an insertion direction in which the second connector is inserted into the first connecting tube.

In one embodiment, the first valve seat includes a first valve seat body. The first valve seat body is configured with a first accommodation chamber with openings at both ends. The opening facing the inner cavity of the liquid reservoir forms the valve port of the first valve seat. The first valve core passes through the first accommodation chamber and is in guiding cooperation with a wall of the first accommodation chamber. A first sealing end of the first valve core enters the inner cavity of the liquid reservoir through the valve port of the first valve seat.

In one embodiment, the first valve assembly further includes a first elastic member. The first elastic member is arranged between an inner wall of the first valve seat and the first valve core, and is configured to apply an elastic force toward the second direction to the first valve core, continuously.

In one embodiment, an outer surface of the first valve core is provided with at least one second step portion. Two ends of the first elastic member press between the inner wall of the first valve seat and the at least one second step portion, respectively.

In one embodiment, the second valve seat includes a second valve seat body. The second valve seat body is configured with a second accommodation chamber with openings at both ends. The opening away from the inner cavity of the liquid storage unit forms the valve port of the second valve seat. The second valve core passes through the second accommodation chamber and is in guiding cooperation with a wall of the second accommodation chamber. A second sealing end of the second valve core seals the valve port of the second valve seat when moving along the first direction.

In one embodiment, an edge of the valve port of the second valve seat is provided with a third flanging portion that is folded inward. The third flanging portion is configured to stop and cooperate with the second sealing end of the second valve core.

In one embodiment, the second valve assembly further comprises a second elastic member; the second elastic member is disposed between an inner wall of the second valve seat and the second sealing end of the second valve core, and is configured to always apply an elastic force toward the first direction to the second valve core. Preferably, an elastic coefficient of the second elastic member is less than an elastic coefficient of the first elastic member.

In one embodiment, an outer wall of the liquid storage unit is configured with a mounting chamber in communication with the inner cavity of the liquid storage unit. The second connector is installed in the mounting chamber.

Beneficial effects of the above water purifier: one end of the sealing ring is in sealing cooperation with the first connecting tube, and the other end of the sealing ring is provided with the mating portion. The mating portion is movably sleeved on the first valve core. The first connecting tube, the first valve core, and the sealing ring together form the accommodating space. Consequently, when the second connector is not inserted into the first connecting tube, water leaking from the side of the liquid reservoir can be temporarily stored in the accommodating space, effectively preventing water from leaking out of the first connecting tube.

### BRIEF DESCRIPTION OF THE DRAWINGS

FIG. 1 is a schematic diagram illustrating a structure of a liquid reservoir and a liquid storage unit cooperating with each other in a water purifier according to some embodiments of the present disclosure;
FIG. 2 is a schematic diagram illustrating a cross-sectional structure of a water purifier according to some embodiments of the present disclosure;
FIG. 3 is a partial enlarged view of a portion A in FIG. 2;
FIG. 4A is a schematic diagram illustrating a structure of a first valve core in a water purifier according to some embodiments of the present disclosure;
FIG. 4B is a schematic diagram illustrating a structure of a second valve seat in a water purifier according to some embodiments of the present disclosure;
FIG. 5 is a schematic diagram illustrating a structure of a water purifier in an initial state according to some embodiments of the present disclosure;
FIG. 6 is a schematic diagram illustrating a structure of a water purifier in a first state according to some embodiments of the present disclosure;
FIG. 7 is a schematic diagram illustrating a structure of a water purifier in a second state according to some embodiments of the present disclosure;
FIG. 8 is a schematic diagram illustrating a structure of a water purifier in a third state according to some embodiments of the present disclosure;
FIG. 9 is a schematic diagram illustrating another structure of a first valve assembly in a water purifier according to some embodiments of the present disclosure;
FIG. 10 is a schematic diagram illustrating another structure of a second valve assembly in a water purifier according to some embodiments of the present disclosure;
FIG. 11 is a schematic diagram illustrating a structure of a water purifier according to some embodiments of the present disclosure;
FIG. 12 is another schematic diagram illustrating a structure of a water purifier according to some embodiments of the present disclosure;
FIG. 13 is a schematic diagram illustrating a structure of a liquid reservoir and a liquid storage unit cooperating with each other in a water purifier according to other embodiments of the present disclosure;
FIG. 14 is a schematic diagram illustrating a partial structure of a water purifier according to other embodiments of the present disclosure;
FIG. 15 is a schematic diagram illustrating a structure of a liquid storage unit according to other embodiments of the present disclosure;
FIG. 16 is a schematic diagram illustrating a cross-sectional structure of a water purifier according to other embodiments of the present disclosure;
FIG. 17 is a schematic diagram illustrating a structure of a water purifier in an initial state according to other embodiments of the present disclosure;
FIG. 18 is a schematic diagram illustrating a structure of a water purifier in a second state according to other embodiments of the present disclosure;
FIG. 19 is a schematic diagram illustrating a structure of a water purifier in a third state according to other embodiments of the present disclosure.

### DETAILED DESCRIPTION

In order to make the above-mentioned objectives, features, and advantages of the present disclosure more apparent and understandable, the specific embodiments of the present disclosure are described in detail below with reference to the accompanying drawings. Many specific details are set forth in the following description to provide a thorough understanding of the present disclosure. However, the present disclosure may be implemented in many other manners different from those described herein, and those skilled in the art may make similar improvements without departing from the spirit of the present disclosure. Therefore, the present disclosure is not limited by the specific embodiments disclosed below.

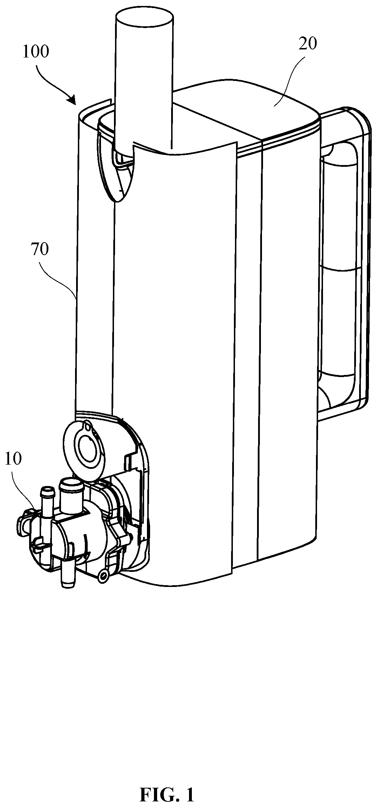

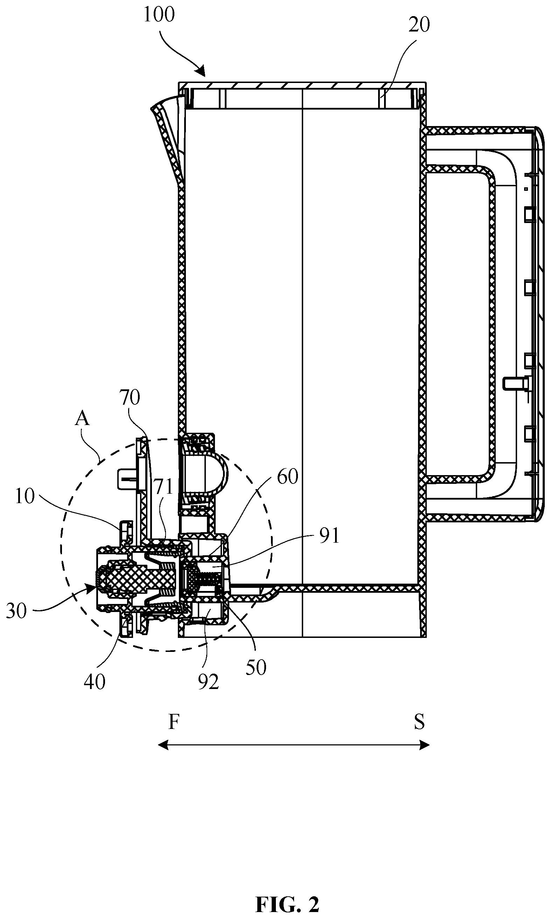

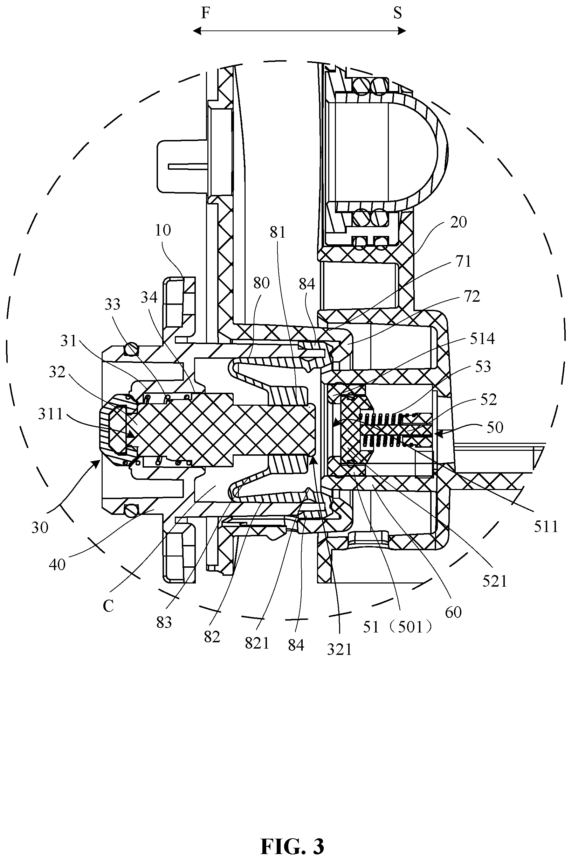

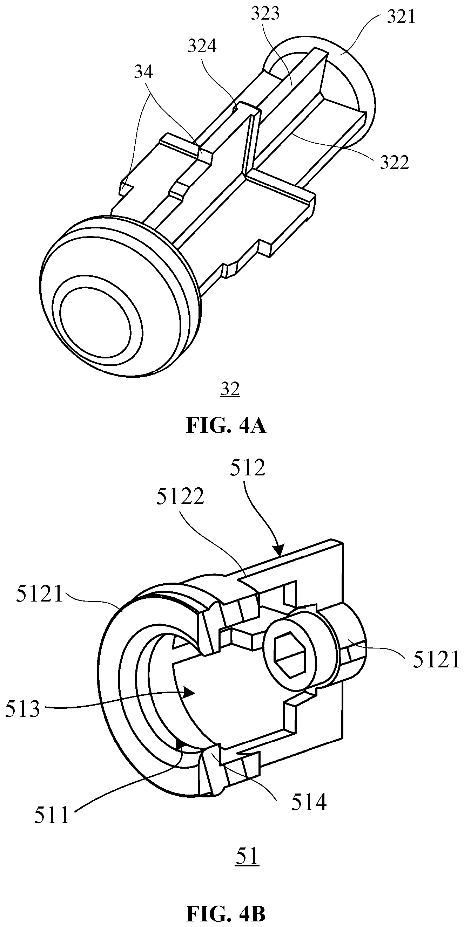

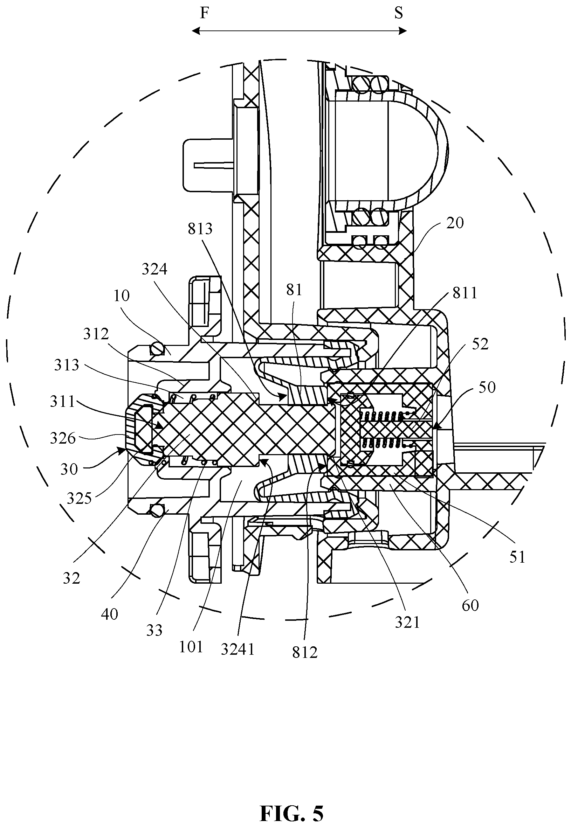

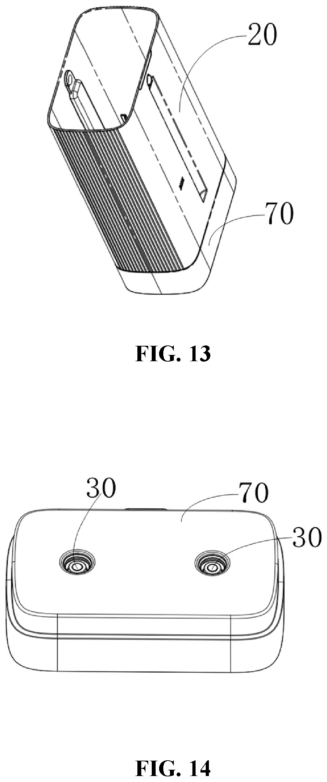

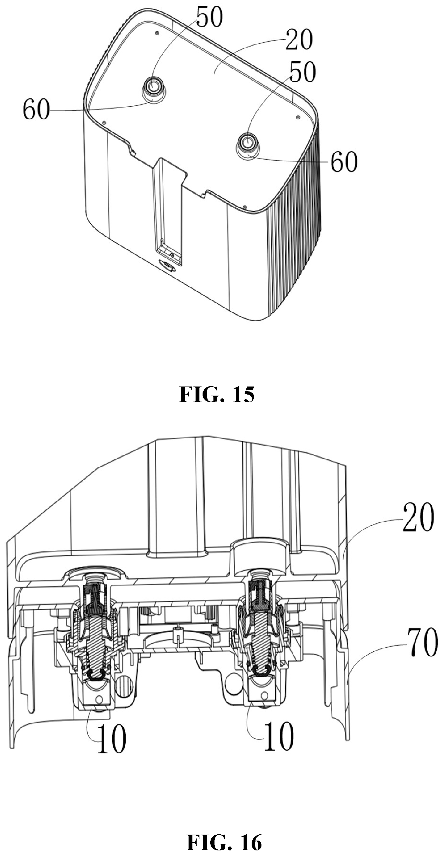

The water purifier according to embodiments of the present disclosure will be described below with reference to the accompanying drawings. FIG. 1 is a schematic diagram illustrating a structure of a liquid reservoir and a liquid storage unit cooperating with each other in a water purifier according to an embodiment of the present disclosure; FIG. 2 is a schematic diagram illustrating a cross-sectional structure of a water purifier according to an embodiment of the present disclosure; FIG. 3 is a partially enlarged view illustrating a portion A in FIG. 2; FIG. 4A is a schematic diagram illustrating a structure of a first valve core in a water purifier according to some embodiments of the present disclosure; and FIG. 4B is a schematic diagram illustrating a structure of a second valve seat in a water purifier according to an embodiment of the present disclosure. FIG. 5 is a schematic diagram illustrating a structure of a water purifier in an initial state according to an embodiment of the present disclosure in an initial state. FIG. 13 is a schematic diagram illustrating a structure of a liquid reservoir and a liquid storage unit cooperating with each other in a water purifier according to other embodiments of the present disclosure; FIG. 14 is a schematic structural diagram illustrating a partial structure of a water purifier according to other embodiments of the present disclosure; FIG. 15 is a schematic diagram illustrating a structure of a liquid storage unit according to other embodiments of the present disclosure; and FIG. 16 is a schematic diagram illustrating a cross-sectional structure of a water purifier according to other embodiments of the present disclosure. Referring to FIG. 1, FIG. 2, FIG. 3, and FIG. 13 to FIG. 16, a water purifier 100 is provided according to an embodiment of the present disclosure. The water purifier 100 comprises a liquid reservoir 10, a liquid storage unit 20, and a first valve assembly 30.

The liquid reservoir 10 is provided with a first connecting tube 40 in communication with an inner cavity of the liquid reservoir 10, and the liquid storage unit 20 is provided with a second connector 60 in communication with an inner cavity of the liquid storage unit 20; the first valve assembly 30 includes a first valve core 32 and a sealing ring 80 located in the first connecting tube 40, wherein the first valve core 32 is configured to open or close the first valve assembly 30 while the second connector 60 is inserted into or pulled out of the first connecting tube 40; one end of the sealing ring 80 is sealingly engaged with the first connecting tube 40, and the other end of the sealing ring 80 is provided with a mating portion 81, wherein the mating portion 81 is movably sleeved on the first valve core 32, and the first connecting tube 40, the first valve core 32, and the sealing ring 80 together form an accommodating space C, and the accommodating space C is in communication with the inner cavity of the liquid reservoir 10 when the first valve assembly 30 is open. The inner cavity Q refers to a cavity configured to pass water, temporarily store water, or store water.

With one end of the sealing ring 80 sealingly engaged with the first connecting tube 40, the other end provided with the mating portion 81, the mating portion 81 movably sleeved on the first valve core 32, and the first connecting tube 40, the first valve core 32, and the sealing ring 80 together forming the accommodating space C, when the second connector 60 is not inserted into the first connecting tube 40, the water leaking from a side of the liquid reservoir 10 may be temporarily stored in the accommodating space C, thereby effectively preventing the water from leaking out of the first connecting tube 40.

Additionally, when the liquid reservoir 10 or the liquid storage unit 20 is a raw water tank or a raw water tank base, after the two are separated, the water leaking from the side of the liquid reservoir 10 may also be temporarily stored in the accommodating space C, and may not leak to an outside of the liquid reservoir 10, which can prevent dripping. Furthermore, there is no possibility of foreign matter such as dust, or the like, entering the liquid reservoir 10.

In some embodiments of the present disclosure, the first valve core 32 is provided with a sealing member 321. The sealing member 321 is configured to sealingly engage with the mating portion 81, thereby sealing the accommodating space C. In this manner, when the second connector 60 is not inserted into the first connecting tube 40, the water can be better prevented from leaking out of the sealed accommodating space C.

Further, the water purifier further includes a second valve assembly 50 provided in the second connector 60. The second valve assembly 50 includes a driving member 501. When the second connector 60 is detached from the first connecting tube 40, the sealing member 321 sealingly engages with the mating portion 81. When the second connector 60 is inserted into the first connecting tube 40, the driving member 501 presses against and drives the mating portion 81 to detach from the sealing member 321, so that the second connector 60 is in communication with the inner cavity of the liquid reservoir 10 via the accommodating space C. In this manner, when the second connector 60 is inserted into the first connecting tube 40, the water in the liquid reservoir 10 may flow through the accommodating space C and into the first connecting tube 40.

Further, the sealing ring 80 is configured as an elastic member. The mating portion 81 is capable of moving along the first direction F under a driving of the driving member 501, or elastically resetting along the second direction S opposite to the first direction F, so that the volume of the accommodating space C becomes smaller or larger. The first direction F is an insertion direction in which the second connector 60 is inserted into the first connecting tube 40. Such a configuration, when the second connector 60 is inserted into the first connecting tube 40, can squeeze out the stale water stored in the accommodating space C, thereby preventing bacteria from breeding there when the usage time is long. When the second connector 60 is fully inserted into the first connecting tube 40, the driving member 501 presses the mating portion 81 to a position closest to the liquid reservoir 10, at which time the volume of the accommodating space C is minimized.

In embodiments of the present disclosure, the second valve assembly 50 includes a second valve seat 51 and a second valve core 52 passing through the second valve seat 51. The second valve seat 51 is connected in the second connector 60. The second valve core 52 is capable of moving relative to the second connector 60 toward the second direction S, or elastically resetting toward the first direction F opposite to the second direction S, to open or close a valve port 511 of the second valve seat 51; the second valve seat 51 forms the driving member. The second direction S is a withdrawal direction in which the second connector 60 is pulled out relative to the first connecting tube 40. The first direction F is an insertion direction in which the second connector 60 is inserted relative to the first connecting tube 40. Specifically, the second valve core 52 moves relative to the second connector 60 toward the second direction S to open the valve port 511 of the second valve seat 51. The second valve core 52 may elastically reset relative to the second connector 60 toward the first direction F to close the valve port 511 of the second valve seat 51.

Similarly, the first valve assembly 30 further includes a first valve seat 31. The first valve core 32 passes through the first valve seat 31. The first valve seat 31 is connected to the first connecting tube 40. The first valve core 32 is capable of moving relative to the first valve seat 31 along the first direction F, or elastically resetting along the second direction S opposite to the first direction F, to open or close a valve port 311 of the first valve seat 31. Specifically, the first valve core 32 may move relative to the first valve seat 31 along the first direction F to open the valve port 311 of the first valve seat 31. The first valve core 32 may move relative to the first valve seat 31 along the second direction S to close the valve port 311 of the first valve seat 31.

In embodiments of the present disclosure, the liquid reservoir 10 may be configured to communicate with a water storage tank (not shown), such that the liquid storage unit 20 may communicate with the water storage tank via the liquid reservoir 10. The second connector 60 may be configured as a tubular member. Additionally, one end of the sealing ring 80 is sealingly engaged with an inner wall of the first connecting tube 40, and both the mating portion 81 and the sealing member 321 may be configured as annular members.

The mating portion 81 may be in clearance fit with an outer periphery of the first valve core 32. The sealing member 321 may seal against an end surface of the mating portion 81 facing the second valve core 52. The mating portion 81 is capable of moving relative to the first valve core 32 toward the first direction F or elastically resetting toward the second direction S.

In embodiments of the present disclosure, a setting position of the second valve seat 51 corresponds to a setting position of the mating portion 81, and a setting position of the second valve core 52 corresponds to a setting position of the first valve core 32. A state where the second connector 60 is located in the first connecting tube 40 and the second valve seat 51 just contacts the mating portion 81 is designated as an initial state, and in the initial state, there is a gap between the first valve core 32 and the second valve core 52, or the first valve core 32 and the second valve core 52 contact each other and do not transmit force to each other.

It can be understood that, by configuring the liquid reservoir 10 with the first connecting tube 40 in communication with the inner cavity of the liquid reservoir 10, and the liquid storage unit 20 with the second connector 60 in communication with the inner cavity of the liquid storage unit 20, with such a configuration, when the second connector 60 is inserted into the first connecting tube 40, and the first valve assembly 30 and the second valve assembly 50 are simultaneously opened, the liquid storage unit 20 may then communicate with the water storage tank via the liquid reservoir 10, thereby achieving communication between the water storage tank and the liquid storage unit 20. The above description designate the water source as the water storage tank as an example. It can be understood by those skilled in the art that the water source may also be tap water.

Furthermore, by connecting the first valve seat 31 in the first connecting tube 40, allowing the first valve core 32 to be capable of moving relative to the first valve seat 31 along the first direction F to open the valve port 311 of the first valve seat 31; and by connecting the second valve seat 51 in the second connector 60, allowing the second valve core 52 to be capable of moving relative to the second valve seat 51 toward the second direction S to open the valve port 511 of the second valve seat 51; and by configuring the setting position of the second valve core 52 to correspond to the setting position of the first valve core 32; with such a configuration, when the second connector 60 is inserted into the first connecting tube 40, the first valve assembly 30 and the second valve assembly 50 interact with each other, which can cause the second valve core 52 and the first valve core 32 to move respectively toward the second direction S and the first direction F, thereby opening the valve port 511 of the second valve seat 51 and the valve port 311 of the first valve seat 31, allowing both the second valve assembly 50 and the first valve assembly 30 to be in an open state.

On the other hand, by allowing the first valve core 32 to be capable of elastically resetting relative to the first valve seat 31 along the second direction S to close the valve port 311 of the first valve seat 31, and allowing the second valve core 52 to be capable of elastically resetting relative to the second valve seat 51 toward the first direction F to close the valve port 511 of the second valve seat 51; with such a configuration, when the second connector 60 is detached from the first connecting tube 40, both the second valve core 52 and the first valve core 32 perform elastic resetting, thereby closing both the valve port 511 of the second valve seat 51 and the valve port 311 of the first valve seat 31, allowing both the first valve assembly 30 and the second valve assembly 50 to be in a closed state.

Furthermore, by providing the sealing member 321, the sealing member 321 is configured to seal against the end surface of the mating portion 81 facing the second valve core 52, and the mating portion 81 is capable of elastically deforming relative to the first valve core 32 toward the first direction F to move or elastically resetting toward the second direction S. The setting position of the second valve seat 51 corresponds to the setting position of the mating portion 81. When the second connector 60 is inserted into the first connecting tube 40, and the second valve seat 51 just contacts the mating portion 81, there is a gap between the first valve core 32 and the second valve core 52.

With such a configuration, since an outer end portion of the sealing ring 80 is sealingly engaged with the inner wall of the first connecting tube 40, when the second connector 60 is inserted into the first connecting tube 40, and the second valve seat 51 just contacts the mating portion 81, a seal is immediately formed with the mating portion 81. At this time, there is a gap between the first valve core 32 and the second valve core 52, and the first valve core 32 and the second valve core 52 do not contact each other, thereby allowing both the first valve assembly 30 and the second valve assembly 50 to be in a closed state. As the insertion of the second connector 60 along the first direction F deepens, the mating portion 81 is pushed by the second valve seat 51 to move relative to the first valve core 32 toward the first direction F, and elastically deforms, thereby causing the second valve seat 51 and the mating portion 81 to press tightly and always maintain a sealed state. During this process, regardless of whether the first valve assembly 30 and the second valve assembly 50 are opened, the water in the first valve assembly 30 and the second valve assembly 50 cannot leak out from a boundary position between the mating portion 81 and the second valve seat 51. Therefore, no water leakage occurs during the entire insertion process of the second connector 60.

When the second connector 60 is detached from the first connecting tube 40, contrary to the above process, as the withdrawal operation of the second connector 60 along the second direction S proceeds, the second valve core 52 and the first valve core 32 may first detach from contact, thereby causing the second valve assembly 50 and the first valve assembly 30 to close respectively. On this basis, the second valve seat 51 continues to move along the second direction S, and the pressing force on the mating portion 81 gradually decreases. Until immediately before the second valve seat 51 leaves the mating portion 81, the second valve seat 51 is in an elastic resetting process, thus always pressing tightly against the mating portion 81, maintaining their sealed cooperation relationship. During this process, regardless of the order of closing of the first valve assembly 30 and the second valve assembly 50, the water in the first valve assembly 30 and the second valve assembly 50 cannot leak out from the boundary position between the mating portion 81 and the second valve seat 51 during the entire closing process of the first valve assembly 30 and the second valve assembly 50. In other words, the second valve seat 51 and the mating portion 81 may only detach from contact and release the sealed state after both the first valve assembly 30 and the second valve assembly 50 are closed. Compared with a situation in the related art where water always flows out during the closing process of the first valve assembly 30 and the second valve assembly 50, this avoids water leakage during the withdrawal process, and also greatly reduces the amount of water leakage during the entire withdrawal process of the second connector 60.

Furthermore, the outer end portion of the sealing ring 80 is sealingly engaged with the inner wall of the first connecting tube 40, and the mating portion 81 at an inner end portion of the sealing ring 80 is sleeved on and in clearance fit with an outer periphery of the first valve core 32. The sealing member 321 seals against the end surface of the mating portion 81 facing the second valve core 52. In this manner, regardless of whether it is during the insertion or withdrawal process of the second connector 60, after the second valve seat 51 and the mating portion 81 detach from contact, the end surface of the mating portion 81 may cooperate with the end surface of the sealing member 321 provided on the first valve core 32 to form a seal, thereby preventing the water in the first valve assembly 30 from leaking out. Thus, it is ensured that no water leakage occurs throughout the entire withdrawal process of the second connector 60.

Referring to FIG. 4A, the first valve core 32 includes a first valve core body 322 and a plurality of first ribs 323. The plurality of first ribs 323 are arranged at intervals and around an outer peripheral surface of the first valve core body 322. The sealing member 321 is provided at an end of the first valve core body 322 away from the inner cavity of the liquid reservoir 10, and is connected to each first rib 323. In this manner, when an end surface of the sealing member 321 contacts and cooperates with an end surface of the mating portion 81, a gap between the first valve core 32 and the mating portion 81 may be completely sealed in a circumferential direction. When the mating portion 81 is subjected to a pressing force from the second valve seat 51 and moves toward the first direction F, it can quickly detach from the sealing member 321. The mating portion 81 is in clearance fit with a first rib 323, so that after the mating portion 81 detaches from the sealing member 321, a channel between the mating portion 81 and the first valve core 32 is unobstructed, thereby facilitating the water in the liquid reservoir 10 to enter and exit the first valve core 32 assembly. After the liquid reservoir 10 is connected to the liquid storage unit 20, it facilitates formation of a water flow channel between the liquid storage unit 20 and the liquid reservoir 10.

Further, the sealing member 321 is configured as a disc-shaped structure. An outer diameter of the sealing member 321 is greater than an inner diameter of the mating portion 81. This can ensure that the sealing member 321 reliably seals the mating portion 81.

In embodiments of the present disclosure, continuing to refer to FIG. 3, the sealing ring 80 includes an annular main body portion 82 and a necking portion 83. Both the necking portion 83 and the mating portion 81 are disposed around an outer side of the first valve core 32. One end of the necking portion 83 is connected to the main body portion 82, and the other end of the necking portion 83 is connected to the mating portion 81. The necking portion 83 may be configured as an elastic member. With such an arrangement, when the mating portion 81 is subjected to an external force, since the necking portion 83 is configured as an elastic member, the mating portion 81 may move relative to the first valve core 32 along the first direction F or elastically reset along the second direction S. The sealing ring 80 may be selected from materials having elastic resilience, such as rubber or silicone, or the like.

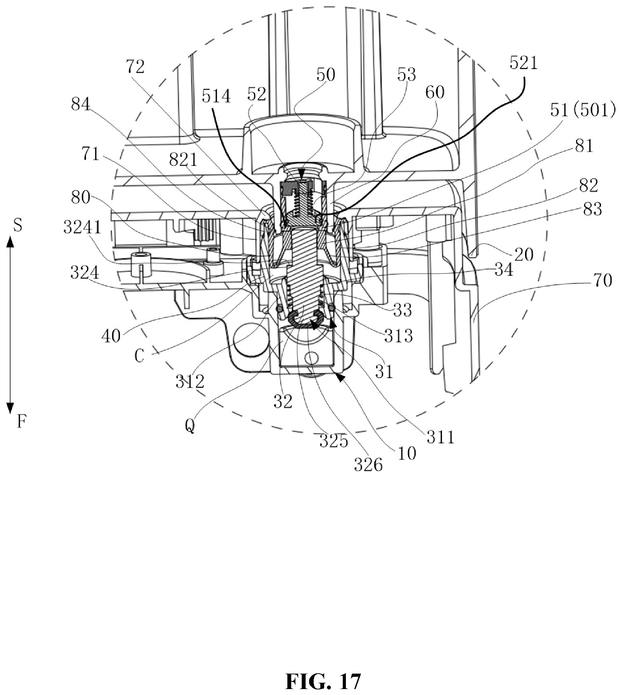

In a specific implementation, as shown in FIG. 3 and FIG. 17, both the necking portion 83 and the mating portion 81 may be located inside the main body portion 82. Alternatively, the main body portion 82, the necking portion 83, and the mating portion 81 may be arranged sequentially along the second direction S.

Further, an end of the main body portion 82 away from the necking portion 83 is provided with a first flanging portion 84 that is folded outward, a peripheral surface of the main body portion 82 presses against an inner wall of the first connecting tube 40, and the first flanging portion 84 is sleeved on an end of the first connecting tube 40 away from the liquid reservoir 10. In this way, a good seal is formed between the first flanging portion 84 and the inner wall of the first connecting tube 40, and additionally, the sealing ring 80 may be installed on the first connecting tube 40 through a mounting space formed between the first flanging portion 84 and the main body portion 82.

Further, referring to FIG. 1, FIG. 2, FIG. 3, FIG. 13, FIG. 16, and FIG. 17, the water purifier 100 further includes a housing 70, the liquid reservoir 10 is connected to the housing 70, the housing 70 is provided with a connecting pipe 71 through which the first connecting tube 40 is inserted, an end of the connecting pipe 71 is provided with a second flanging portion 72 that is folded inward, and the second flanging portion 72 presses the first flanging portion 84 tightly against the end of the first connecting tube 40 away from the liquid reservoir 10. With such an arrangement, the second flanging portion 72 may press against an outer side of the first flanging portion 84, thereby pressing the first flanging portion 84 tightly against the end of the first connecting tube 40.

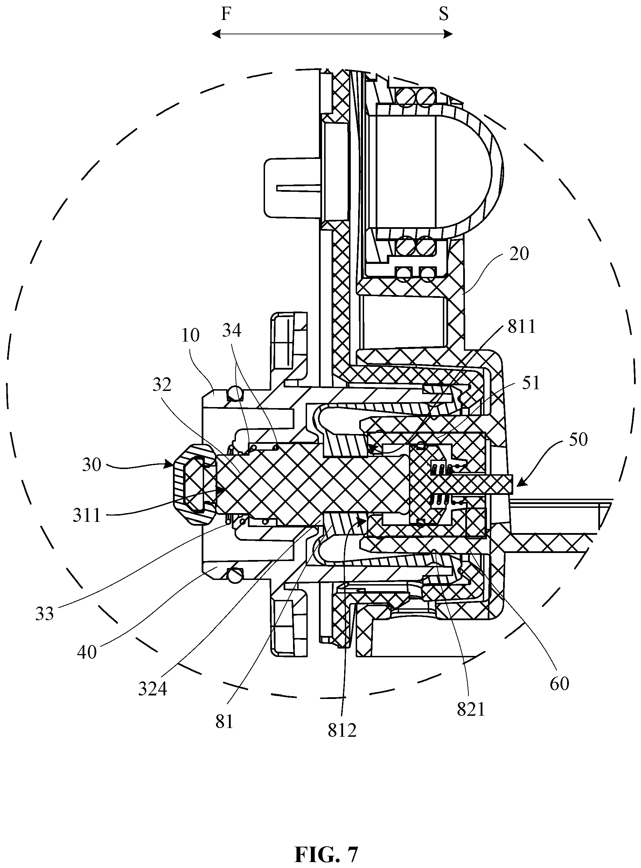

It should be noted that the phrase 'the first valve assembly 30 includes the first valve core 32 and the sealing ring 80 located in the first connecting tube 40' refers to at least a portion of the first valve core 32 and the sealing ring 80 being located in the first connecting tube 40, rather than merely referring to a case where the first valve core 32 and the sealing ring 80 are completely located in the first valve assembly 30. For example, in FIG. 7, the sealing ring 80 also includes a portion located outside the first connecting tube 40.

In an embodiment of the present disclosure, continuing to refer to FIG. 3 and FIG. 17, an inner diameter of the mating portion 81 is less than or equal to an inner diameter of the second valve seat 51, and projections of surfaces of the mating portion 81 and the second valve seat 51 facing each other on a plane perpendicular to the first direction F have an overlapping portion. With such an arrangement, it facilitates the second valve seat 51 to smoothly press against the mating portion 81 and move along the F.

Further, an outer diameter of the second connector 60 is less than an inner diameter of the main body portion 82, an annular protruding portion 821 is provided inside the main body portion 82, and when the second connector 60 is inserted into the first connecting tube 40, the protruding portion 821 presses against an outer wall of the second connector 60. With such an arrangement, it also facilitates the second connector 60 to be smoothly inserted into the first connecting tube 40. The protruding portion 821 presses against the outer wall of the second connector 60, on the one hand, making the insertion operation more tactile, and on the other hand, facilitating the formation of a seal between the second connector 60 and the sealing ring 80, thereby preventing the second connector 60 from withdrawing from the first connecting tube 40.

In an embodiment of the present disclosure, referring to FIG. 5, surfaces of the mating portion 81 and the second valve seat 51 facing each other are respectively designated as a first surface 811 and a second surface 812.

In the initial state, an end of the first valve core 32 away from the inner cavity of the liquid reservoir 10 protrudes beyond the first surface 811, and a distance D1 between an end surface of the first valve core 32 facing the second valve core 52 and the first surface 811 and a distance D2 between an end surface of the second valve core 52 facing the first valve core 32 and the second surface 812 satisfy: D1 < D2. With such an arrangement, it facilitates that when the first surface 811 and the second surface 812 contact each other, there is still a gap between the first valve core 32 and the second valve core 52, ensuring that when the second connector 60 is inserted, the mating portion 81 and the second valve seat 51 first contact each other to form a seal, and then open the first valve assembly 30 and the second valve assembly 50; meanwhile, when the second connector 60 is withdrawn, after both the first valve assembly 30 and the second valve assembly 50 are closed, the mating portion 81 and the second valve seat 51 detach from each other.

Further, an end surface of the mating portion 81 away from the first surface 811 is designated as a third surface 813. Referring to FIG. 4 and FIG. 5, a first step portion 324 that is locally protruding is provided between two ends of the first valve core 32, and the first step portion 324 is configured to block a moving path of the mating portion 81 along the F. The first step portion 324 includes a first step surface 3241 extending radially along the first valve core 32, and the first step surface 3241 is arranged opposite to the third surface 813. A distance D3 between the end surface of the first valve core 32 facing the second valve core 52 and the first step surface 3241 and a thickness dimension D4 of the mating portion 81 along the first direction F satisfy: D3 > D4. With such an arrangement, during insertion of the second connector 60, after the second valve seat 51 contacts the sealing ring 80, as the sealing ring 80 is pressed and deformed, and after the second valve core 52 contacts the first valve core 32, the second valve core 52 is opened. As the second connector 60 is further inserted, the second valve seat 51 may press against the mating portion 81 and move relative to the first valve core 32 along the first direction F, until the third surface 813 contacts the first step surface 3241. The second valve seat 51 continues to move forward along the first direction F by pressing against the first step portion 324 through the mating portion 81, pushing the first valve core 32 to move along the first direction F, thereby opening the valve port 311 of the first valve seat.

Further, the first valve seat 31 includes a first valve seat body 312, the first valve seat body 312 is configured with a first accommodation chamber 313 with openings at both ends, and an opening of the first accommodation chamber facing the inner cavity of the liquid reservoir 10 forms the valve port 311 of the first valve seat. The first valve core 32 passes through the first accommodation chamber 313 and is in guiding cooperation with a wall of the first accommodation chamber 313, and a first sealing end 325 of the first valve core 32 enters the inner cavity of the liquid reservoir 10 through the valve port 311 of the first valve seat. A first valve core sealing member 326 may also be provided on the first sealing end 325 of the first valve core 32, configured to form a sealing cooperation with the valve port 311 of the first valve seat when contacting the valve port 311 of the first valve seat.

Further, the first valve assembly 30 further includes a first elastic member 33, the first elastic member 33 is disposed between an inner wall of the first valve seat 31 and the first valve core 32, and is configured to always apply an elastic force toward the second direction S to the first valve core 32, which allows for the elastic resetting of the first valve core 32.

Further, combined with FIG. 3 and FIG. 4A, an outer surface of the first valve core 32 is provided with at least one second step portion 34, and two ends of the first elastic member 33 press between an inner wall of the first valve seat 31 and the at least one second step portion 34, respectively. In this way, the first elastic member 33 thereby facilitates simple positioning by being sleeved on the first valve core 32 and having two ends pressing between the inner wall of the first valve seat 31 and the second step portion 34, respectively.

Further, combined with FIG. 3 and FIG. 4B, the second valve seat 51 includes a second valve seat body 512, the second valve seat body 512 is configured with a second accommodation chamber 513 with openings at both ends, and an opening of the second accommodation chamber 513 away from the inner cavity of the liquid storage unit 20, i.e., an opening facing the first valve seat 31, forms the valve port 511 of the second valve seat.

In a specific implementation, the second valve seat body 512 may include two bases 5121 and a plurality of connecting ribs 5122 connected between the two bases 5121. In FIG. 3, a cutting position of a cross-section is located between two adjacent connecting ribs 5122; therefore, the connecting ribs 5122 are not shown in FIG. 3.

The second valve core 52 passes through the second accommodation chamber 513 and is in guiding cooperation with a wall of the second accommodation chamber 513, and when a second sealing end 521 of the second valve core 52 moves along the first direction F, the second sealing end 521 seals the valve port 511 of the second valve seat.

An edge of the valve port 511 of the second valve seat is provided with a third flanging portion 514 that is folded inward, and the third flanging portion 514 is configured to stop and cooperate with the second sealing end 521 of the second valve core 52.

In an embodiment of the present disclosure, the second valve assembly 50 further includes a second elastic member 53, the second elastic member 53 is disposed between an inner wall of the second valve seat 51 and the second sealing end 521 of the second valve core 52, and is configured to always apply an elastic force in the first direction F to the second valve core 52, which allows for the elastic resetting of the second valve core 52.

Additionally, regarding the installation of the second connector 60, referring to FIG. 2, an outer wall of the liquid storage unit 20 is configured with a mounting chamber 91 in communication with the inner cavity of the liquid storage unit 20, and the second connector 60 is installed in the mounting chamber 91. Of course, a clearance chamber 92 is also provided outside the mounting chamber 91 to facilitate accommodating the first connecting tube 40.

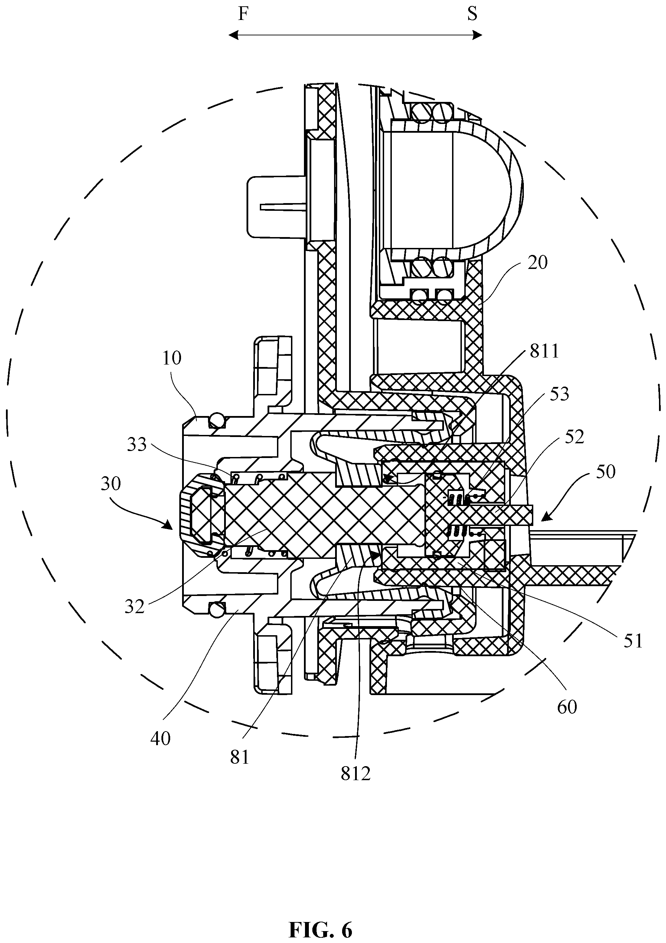

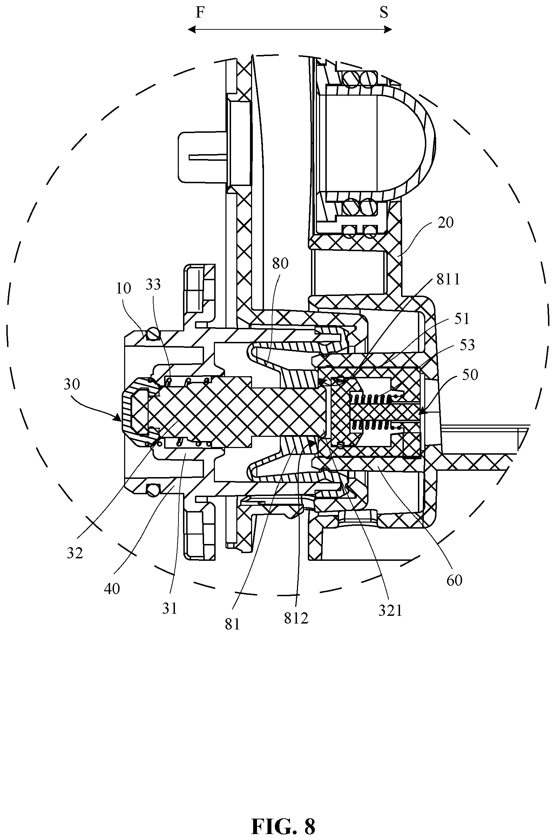

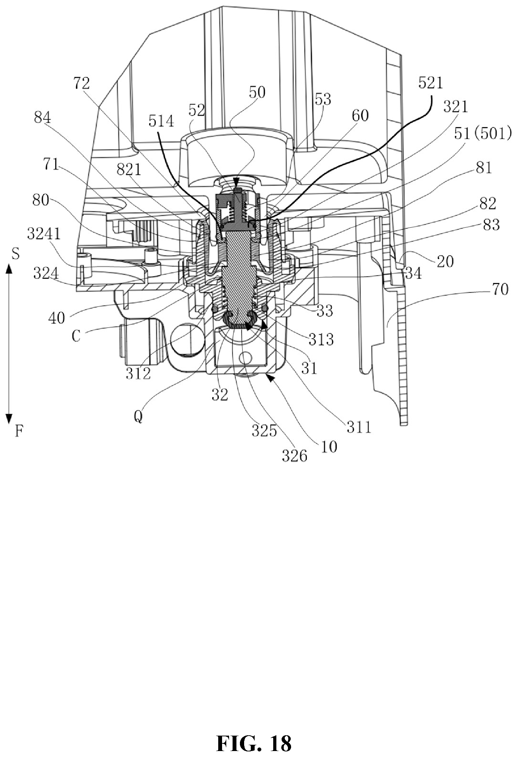

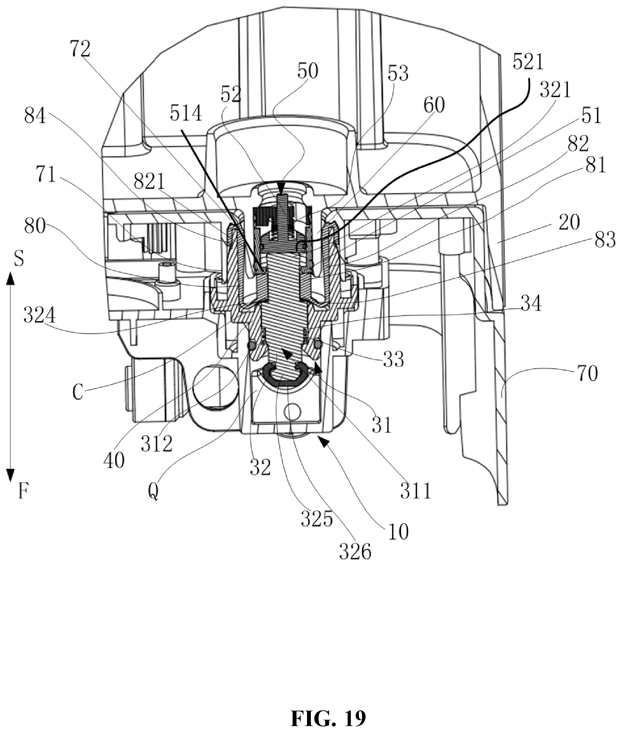

FIG. 6 is a schematic diagram illustrating a structure of a water purifier in a first state according to an embodiment of the present disclosure. FIG. 7 is a schematic diagram illustrating a structure of a water purifier in a second state according to an embodiment of the present disclosure. FIG. 8 is a schematic diagram illustrating a structure of a water purifier in a third state according to an embodiment of the present disclosure. FIG. 17 is a schematic diagram illustrating a structure of a water purifier in an initial state according to other embodiments of the present disclosure. FIG. 18 is a schematic diagram illustrating a structure of a water purifier in a second state according to other embodiments of the present disclosure. FIG. 19 is a schematic diagram illustrating a structure of a water purifier in a third state according to other embodiments of the present disclosure.

Hereinafter, the insertion and withdrawal process of the liquid storage unit 20 and the liquid reservoir 10 in the water purifier 100 according to an embodiment of the present disclosure will be described with reference to FIG. 3, FIG. 5, FIG. 6, FIG. 7, and FIG. 8.

FIG. 3 illustrates a schematic diagram of the second connector 60 just inserted into the first connecting tube 40, and at this time, both the first valve assembly 30 and the second valve assembly 50 are in a closed state. The sealing member 321 seals against the end surface of the mating portion 81, therefore, neither the side of the first valve assembly 30 nor the side of the second valve assembly 50 will leak water.

FIG. 5 (FIG. 17) shows the initial state, at this time, both the first valve assembly 30 and the second valve assembly 50 are still in a closed state; the second surface 812 of the second valve seat 51 just contacts the first surface 811 of the mating portion 81; at this time, there is a gap between the first valve core 32 and the second valve core 52, and they are not in contact, and the second surface 812 of the second valve seat 51 and the first surface 811 of the mating portion 81 contact each other to form a seal. The sealing member 321 seals against the end surface of the mating portion 81, and water cannot leak out from either the first valve assembly 30 or the second valve assembly 50.

Referring to FIG. 6 (FIG. 18), when the second connector 60 is further inserted into the first connecting tube 40 along the first direction F, the first valve core 32 and the second valve core 52 contact each other, and since an elastic coefficient of the first elastic member 33 is greater than an elastic coefficient of the second elastic member 53, the second valve core 52 is pushed open by the first valve core 32, thereby opening the second valve assembly 50, and placing the water purifier 100 in a first state. During this process, since the second surface 812 of the second valve seat 51 and the first surface 811 of the mating portion 81 always contact each other to form a seal, water may not leak out from between the second valve seat 51 and the mating portion 81.

Referring to FIG. 7 (FIG. 19), when the second connector 60 is further inserted into the first connecting tube 40 along the first direction F, the second valve seat 51 drives the mating portion 81 to move along the first direction F, while causing an elastic deformation of the mating portion 81 and causing the mating portion 81 to press against the first step portion 324, and driving the first valve core 32 to also move along the first direction F, overcoming the elastic force of the first elastic member 33, thereby pushing open the first valve core 32, thereby also opening the first valve assembly 30, and placing the water purifier 100 in a second state. At this time, both the first valve assembly 30 and the second valve assembly 50 are open, thereby realizing water flow between the liquid storage unit 20 and the liquid reservoir 10. In the position of FIG. 7, the second step portion 34 on the first valve core 32 presses against a periphery of the valve port 311 of the first valve seat, thereby preventing the first valve seat 31 from continuing to move toward the F.

It can be understood that, since the second surface 812 of the second valve seat 51 and the first surface 811 of the mating portion 81 always contact each other to form the seal, water may not leak out from between the second valve seat 51 and the mating portion 81. During this process, an outer wall of the second connector 60 and the protruding portion 821 always have an interference fit, which can prevent the second connector 60 from being pulled out of the first connecting tube 40 toward the S, and further prevent water from leaking out.

Referring to FIG. 8, when the liquid storage unit 20 is pulled out, as the second valve seat 51 is withdrawn along the S, the first elastic member 33 elastically resets, and the first valve core 32 gradually moves toward the S, firstly closing the first valve assembly 30. At this time, after the third surface 813 of the mating portion 81 detaches from the second step portion 34, the second valve seat 51 no longer applies pressing pressure to the first valve core 32 through the mating portion 81.

In addition, the second connector 60 continues to be withdrawn. Due to the absence of the pressing pressure from the second valve seat 51, the mating portion 81 also gradually elastically resets. During this process, the second elastic member 53 also gradually elastically resets to close the second valve assembly 50. After the second valve assembly 50 is completely closed, the second connector 60 continues to be withdrawn. During this process, the first surface 811 of the mating portion 81 and the second surface 812 of the second valve seat 51 always remain in sealed contact, thereby preventing water leakage, and causing the water purifier 100 to be in a third state as shown in FIG. 8. Of course, during this process, since an outer diameter of the sealing member 321 is 8.0 mm and the inner diameter of the mating portion 81 is 7.3 mm, during the resetting process of the mating portion 81, the sealing member 321 eventually presses against the first surface 811 of the mating portion 81, thereby achieving the effect of no water leakage when the liquid storage unit 20 is pulled out. At this time, the water on a side of the first valve assembly 30 is all stored in a space defined by the sealing ring 80 and the first valve seat 31, and will not leak out. When the liquid storage unit 20 continues to be pulled out, the mating portion 81 and the second valve seat 51 detach from each other, and the state shown in FIG. 3 can be returned to.

FIGS. 17-19 also illustrate an insertion and withdrawal process of the liquid storage unit 20 and the liquid reservoir 10, the working principle of which is the same as the above-described process, and therefore will not be described again in the present disclosure.

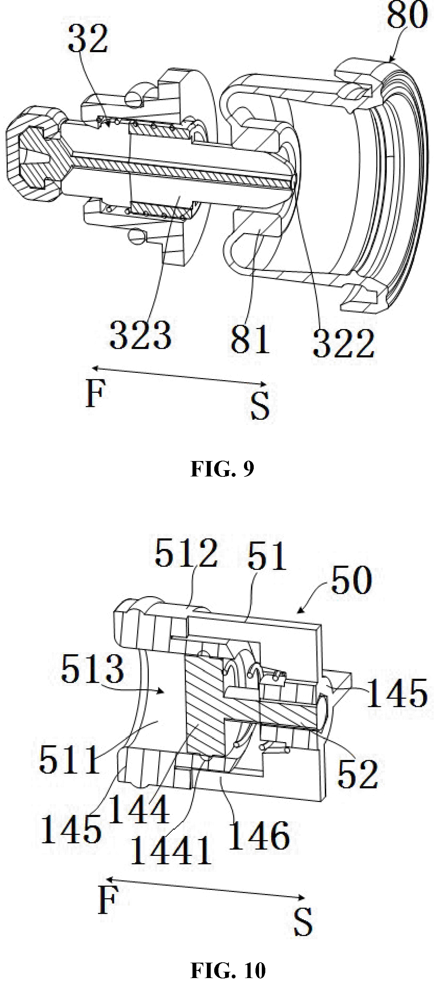

FIG. 9 is a schematic diagram illustrating another structure of a first valve assembly in a water purifier according to some embodiments of the present disclosure, and FIG. 10 is a schematic diagram illustrating another structure of a second valve assembly in the water purifier according to some embodiments of the present disclosure.

Referring to FIGS. 9 and 10, based on the above-described embodiment, the structures of the first valve assembly 30 and the second valve assembly 50 are further improved, and other structures are similar to those previously described, and therefore will not be described again herein.

Specifically, the first valve core 32 includes a first valve core body 322 and a plurality of first ribs 323, and the plurality of first ribs 323 are arranged at intervals and around an outer peripheral surface of the first valve core body 322. As described above, when the mating portion 81 is configured as an annular member, the mating portion 81 is sleeved on an outer peripheral side of each first rib 323 and is in clearance fit with the outer peripheral side of each first rib 323, and an inner diameter of the mating portion 81 is less than 7 mm.

Such a configuration may form a sealing water film between an inner wall of the mating portion 81 and the first valve core 32 (which forms a cross-shaped section). Thus configured, since an outer end of the sealing ring 80 sealingly cooperates with an inner wall of the first connecting tube 40, and the sealing water film is formed between the mating portion 81 at an inner end of the sealing ring 80 and the first valve core 32, such that, regardless of the insertion or withdrawal process of the second connector 60, after the second valve seat 51 and the mating portion 81 detach from each other, the mating portion 81 will always form a seal with the first valve core 32, preventing water from leaking out of the first valve assembly 30, thereby ensuring that no water leakage occurs throughout the entire withdrawal process of the second connector 60.

In addition, referring continually to FIG. 10, the second valve seat 51 includes a second valve seat body 512, the second valve seat body 512 is configured with a second accommodation chamber 513 with openings at both ends, and an opening of the second accommodation chamber 513 away from the inner cavity of the liquid storage unit 20 forms the valve port 511 of the second valve seat.

The second valve core 52 passes through the second accommodation chamber 513 and is in guiding cooperation with a wall of the second accommodation chamber 513, and when the second sealing end 521 of the second valve core 52 moves along the first direction F, the second sealing end 521 seals the valve port 511 of the second valve seat. An annular protruding portion 1441 is provided on an outer side of the second sealing end 521, and when the second valve core 52 moves such that the annular protruding portion 1441 is located outside a wall of the valve port 511 of the second valve seat, the second valve assembly 50 is opened. The liquid storage unit sealing end 144 refers to the above-described second sealing end 521.

In a specific implementation, the second valve seat body 512 may include two bases 145 and a plurality of connecting ribs 146 connected between the two bases 145. Between the bases 145 and the plurality of connecting ribs 146, the second accommodation chamber 513 is defined.

In an embodiment of the present disclosure, the liquid reservoir 10 is a communicating vessel, and the liquid storage unit 20 is a clean water tank; or, the liquid reservoir 10 is a raw water tank base, and the liquid storage unit 20 is a raw water tank; or, the liquid reservoir 10 is a raw water tank, and the liquid storage unit 20 is a raw water tank base.

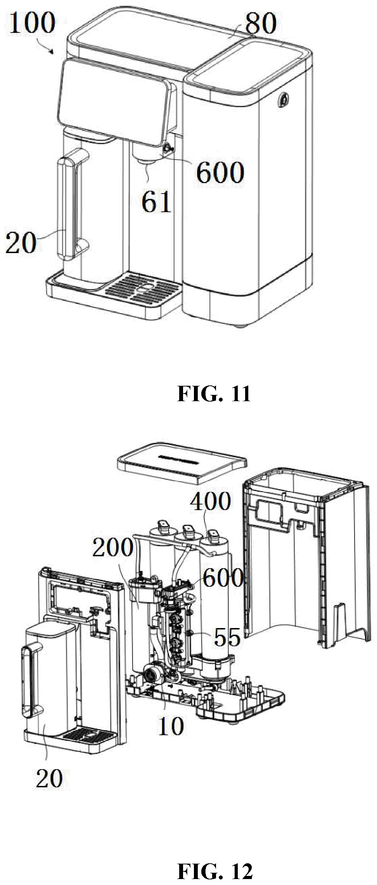

FIG. 11 is a schematic diagram illustrating a structure of a water purifier according to an embodiment of the present disclosure, and FIG. 12 is another schematic diagram illustrating a structure of a water purifier according to some embodiments of the present disclosure FIGS. 1-12 illustrate embodiments in which the liquid reservoir 10 is a communicating vessel and the liquid storage unit 20 is a clean water tank. Referring continually to FIGS. 11 and 12, embodiments of the present disclosure provides a water purifier 100 configured to purify water from a to-be-filtered water source.

The water purifier 100 further includes: a housing; a filter; a level box 200; a water pump; a heater 55; and a water vapor separator 600. The filter is in communication with the inner cavity C of the communicating vessel, the communicating vessel is respectively in communication with the clean water tank and the level box 200, and the water pump is respectively in communication with the inner cavity C of the communicating vessel and the heater, thereby allowing the water pump to draw water from the level box 200 and the clean water tank through the communicating vessel to the heater. The heater is in communication with the water vapor separator 600. It should be noted that the communicating vessel and the clean water tank are detachably connected.

Thus configured, when a user takes water, the water pump draws water from the communicating vessel, and water in the level box 200 and the clean water tank simultaneously flows into the water pump through the communicating vessel. The water from the water pump flows into the heater 55, and after being heated by the heater 55, flows into the water vapor separator 600, and then flows out from the water vapor separator 600.

The filter is configured to connect with the to-be-purified water source, so as to facilitate filtering the to-be-purified water source. The clean water tank is configured to store filtered clean water. A water level sensor 12 is provided in the level box 200, the clean water tank 20 is in communication with the level box 200 through the communicating vessel, and both the clean water tank 20 and the level box 200 are in communication with the atmosphere. According to the principle of the communicating vessel, the water level in the level box 200 can reflect a water level in the clean water tank 20.

The heater is configured to heat clean water, the water vapor separator 600 is configured to separate water vapor from heated clean water, a water vapor separation outlet 61 is provided on the water vapor separator 600, and the water vapor separation outlet 61 forms a water outlet of the water purifier 100.

When a user needs to take clean water, the water pump operates, and simultaneously draws water from the clean water tank and the level box into the heater through the communicating vessel. After passing through the heater, and then continually passing through the water vapor separator 600, it is taken out from the water vapor separation outlet 61.

When the water level in the level box 200 is lower than the high water level described below, the filter 400 operates to purify a to-be-purified water source, and purified water enters the level box 200 and the clean water tank respectively through the communicating vessel.

The water level sensor is provided in the level box 200. Merely by way of example, the water level sensor is configured as a float sensor, and the water level sensor includes a first float and a second float. The first float and the second float are respectively configured to detect whether a water level reaches a high water level or a low water level. Of course, in other embodiments, the water level sensor may include only one float, and use this float to detect whether the water level reaches the high water level or the low water level. The above-described detection manners of a dual-float or single-float are conventional technical means in the art, and therefore will not be described again in the present disclosure. Of course, other manners for detecting the high water level or the low water level may also be used, for example, by utilizing an optical sensor, and the present disclosure does not specifically limit this.

In an embodiment of the present disclosure, the water purifier 100 further includes a controller (not shown). The controller is electrically connected to the water level sensor and the booster pump. The controller is configured to control the booster pump to stop operating, thereby stopping water production, when a liquid level in the level box 200 is at a high liquid level; to control the booster pump to start operating to produce water when the liquid level in the level box 200 is below the high liquid level; and to control the water pump to stop operating to stop water discharge when the liquid level in the level box 200 is at a low liquid level.

FIGS. 13-19 illustrate embodiments in which the liquid reservoir 10 is a raw water tank base and the liquid storage unit 20 is a raw water tank. In FIGS. 13-19, elements with the same reference numerals as those in the above-described FIGS. 1-8 have the same or similar structures, and therefore will not be described again in the present disclosure. In this embodiment, the raw water tank base is configured to provide raw water from the raw water tank to the filter. In practical application, the raw water from the raw water tank is provided to a booster pump via the raw water tank base, and is provided to the filter via the booster pump for filtering. The raw water tank base may also be configured to provide filtered concentrated water to the raw water tank.

In FIGS. 13-19, embodiments in which the raw water tank and the raw water tank base respectively include two water passages is illustrated, wherein one water passage is a raw water inlet, and the other water passage is a concentrated water outlet. Of course, in other embodiments of the present disclosure, the raw water tank and the raw water tank base may also include only one water passage, which serves as the raw water inlet to provide raw water to the entire machine. In FIGS. 13-15, embodiments in which structures of the two water passages are the same is illustrated, and in other embodiments of the present disclosure, the structure to be protected by the present disclosure may also be used for one water passage.

The technical features of the above-described embodiments may be arbitrarily combined. To simplify the description, not all possible combinations of the various technical features in the above-described embodiments have been described, however, as long as combinations of these technical features do not conflict, they should all be considered within the scope of the present disclosure.

The above-described embodiments merely express several implementations of the present disclosure, and their descriptions are relatively specific and detailed, but should not therefore be understood as a limitation on the scope of the patent application. It should be noted that, for a person of ordinary skill in the art, several variations and improvements may also be made without departing from the inventive concept of the present disclosure, and these all fall within the protection scope of the present disclosure. Accordingly, a scope of protection for the present disclosure shall be defined by the appended claims.

## Claims

1. A water purifier, comprising: a liquid reservoir (10), a first valve assembly (30), and a liquid storage unit (20); wherein
the liquid reservoir (10) is provided with a first connecting tube (40) in communication with an inner cavity of the liquid reservoir (10); the liquid storage unit (20) is provided with a second connector (60) in communication with an inner cavity of the liquid storage unit (20);
the first valve assembly (30) includes a first valve core (32) and a sealing ring (80) located in the first connecting tube (40), the first valve core (32) is configured to open or close the first valve assembly (30) while the second connector (60) is inserted into or pulled out of the first connecting tube (40);
one end of the sealing ring (80) is sealingly engaged with the first connecting tube (40), and the other end of the sealing ring (80) is provided with a mating portion (81), the mating portion (81) is movably sleeved on the first valve core (32), the first connecting tube (40), the first valve core (32), and the sealing ring (80) together form an accommodating space (C), and the accommodating space (C) is in communication with the inner cavity of the liquid reservoir (10) when the first valve assembly (30) is open.

2. The water purifier according to claim 1, wherein the first valve core (32) is provided with a sealing member (321), and the sealing member (321) is configured to sealingly engage with the mating portion (81).

3. The water purifier according to claim 2, wherein the water purifier further includes a second valve assembly (50) provided in the second connector (60);
the second valve assembly (50) includes a driving member (501), and when the second connector (60) is detached from the first connecting tube (40), the sealing member (321) sealingly engages with the mating portion (81);
when the second connector (60) is inserted into the first connecting tube (40), the driving member (501) presses against and drives the mating portion (81) to detach from the sealing member (321), so that the second connector (60) is in communication with the inner cavity of the liquid reservoir (10) via the accommodating space (C).

4. The water purifier according to claim 3, wherein the sealing ring (80) is configured as an elastic member, the mating portion (81) is capable of moving along a first direction (F) under driving of the driving member (501), or elastically resetting along a second direction (S) opposite to the first direction (F), so that a volume of the accommodating space (C) becomes smaller or larger, and the first direction (F) is an insertion direction in which the second connector (60) is inserted into the first connecting tube (40).

5. The water purifier according to claim 3, wherein the second valve assembly (50) includes a second valve seat (51) and a second valve core (52) passing through the second valve seat (51), the second valve seat (51) is connected in the second connector (60), the second valve core (52) is capable of moving relative to the second connector (60) toward the second direction (S), or elastically resetting toward the first direction (F) opposite to the second direction (S), to open or close a valve port (511) of the second valve seat; the second valve seat (51) forms the driving member (501);
the second direction (S) is a withdrawal direction in which the second connector (60) is pulled out relative to the first connecting tube (40).

6. The water purifier according to claim 5, wherein a setting position of the second valve seat (51) corresponds to a setting position of the mating portion (81), a setting position of the second valve core (52) corresponds to a setting position of the first valve core (32), a state where the second connector (60) is located in the first connecting tube (40) and the second valve seat (51) just contacts the mating portion (81) as an initial state, and in the initial state, there is a gap between the first valve core (32) and the second valve core (52), or the first valve core (32) and the second valve core (52) contact each other and do not transmit force to each other.

7. The water purifier according to claim 5 or 6, wherein the mating portion (81) is in clearance fit with the first valve core (32), and the sealing member (321) seals against an end surface of the mating portion (81) facing the second valve core (52).

8. The water purifier according to claim 7, wherein the first valve core (32) includes a first valve core body (322) and a plurality of first ribs (323), the plurality of first ribs (323) are arranged at intervals and around a peripheral surface of the first valve core body (322), the sealing member (321) is provided at an end of the first valve core body (322) away from the inner cavity of the liquid reservoir (10) and is connected to each first rib (323).

9. The water purifier according to claim 1, wherein the first valve core (32) includes a first valve core body (322) and a plurality of first ribs (323), the plurality of first ribs (323) are arranged at intervals and around a peripheral surface of the first valve core body (322);
the mating portion (81) is configured as an annular member and is sleeved on an outer peripheral side of each first rib (323) and is in clearance fit with the outer peripheral side of each first rib (323), and an inner diameter of the mating portion (81) is less than 7 mm.

10. The water purifier according to claim 8, wherein both the mating portion (81) and the sealing member (321) are configured as annular members.

11. The water purifier according to claim 10, wherein the sealing member (321) is configured as a disc-shaped structure, and an outer diameter of the sealing member (321) is greater than an inner diameter of the mating portion (81), so as to seal the accommodating space (C).

12. The water purifier according to claim 5 or 6, wherein the sealing ring (80) includes an annular main body portion (82) and a necking portion (83), both the necking portion (83) and the mating portion (81) are disposed around an outer side of the first valve core (32), one end of the necking portion (83) is connected to the main body portion (82), and the other end of the necking portion (83) is connected to the mating portion (81).

13. The water purifier according to claim 12, wherein both the necking portion (83) and the mating portion (81) are located inside the main body portion (82); or
the main body portion (82), the necking portion (83), and the mating portion (81) are arranged sequentially along the second direction (S).

14. The water purifier according to claim 12, wherein an end of the main body portion (82) away from the necking portion (83) is provided with a first flanging portion (84) that is folded outward, a peripheral surface of the main body portion (82) presses against an inner wall of the first connecting tube (40), and the first flanging portion (84) is sleeved on an end of the first connecting tube (40) away from the liquid reservoir (10).

15. The water purifier according to claim 14, wherein the water purifier (100) further includes a housing (70), the liquid reservoir (10) is connected to the housing (70), the housing (70) is provided with a connecting pipe (71) through which the first connecting tube (40) is inserted, an end of the connecting pipe (71) is provided with a second flanging portion (72) that is folded inward, and the second flanging portion (72) presses the first flanging portion (84) tightly against the end of the first connecting tube (40) away from the liquid reservoir (10).

16. The water purifier according to claim 12, wherein an inner diameter of the mating portion (81) is less than or equal to an inner diameter of the second valve seat (51); and
projections of surfaces of the mating portion (81) and the second valve seat (51) facing each other on a plane perpendicular to the first direction (F) have an overlapping portion.

17. The water purifier according to claim 16, wherein an annular protruding portion (821) is provided inside the main body portion (82), and when the second connector (60) is inserted into the first connecting tube (40), the protruding portion (821) presses against an outer wall of the second connector (60); when the second connector (60) is inserted into the first connecting tube (40), at least a portion of the second connector (60) is located between the mating portion (81) and the main body portion (82).

18. The water purifier according to claim 6, wherein surfaces of the mating portion (81) and the second valve seat (51) facing each other are respectively designated as a first surface (811) and a second surface (812);
in the initial state, an end of the first valve core (32) away from the inner cavity of the liquid reservoir (10) protrudes beyond the first surface (811);
a distance D1 between an end surface of the first valve core (32) facing the second valve core (52) and the first surface (811) and a distance D2 between an end surface of the second valve core (52) facing the first valve core (32) and the second surface (812) satisfy: D1 < D2.

19. The water purifier according to claim 18, wherein an end surface of the mating portion (81) away from the first surface (811) is designated as a third surface (813);
a first step portion (324) that is locally protruding is provided between two ends of the first valve core (32), and the first step portion (324) is configured to block a moving path of the mating portion (81) along the first direction (F);
the first step portion (324) includes a first step surface (3241) extending radially along the first valve core (32), and the first step surface (3241) is arranged opposite to the third surface (813);
a distance D3 between an end surface of the first valve core (32) facing the second valve core (52) and the first step surface (3241) and a thickness dimension D4 of the mating portion (81) along the first direction (F) satisfy: D3 > D4.

20. The water purifier according to any one of claims 1 to 6, wherein the first valve assembly (30) further includes a first valve seat (31), the first valve core (32) passes through the first valve seat (31), the first valve seat (31) is connected to the first connecting tube (40), the first valve core (32) is capable of moving relative to the first valve seat (31) along a first direction (F), or elastically resetting along a second direction (S) opposite to the first direction (F), to open or close a valve port (311) of the first valve seat (31), and the first direction (F) is an insertion direction in which the second connector (60) is inserted into the first connecting tube (40).

21. The water purifier according to claim 20, wherein the first valve seat (31) includes a first valve seat body (312), the first valve seat body (312) is configured with a first accommodation chamber (313) with openings at both ends, an opening of the first accommodation chamber facing the inner cavity of the liquid reservoir (10) forms the valve port (311) of the first valve seat;
the first valve core (32) passes through the first accommodation chamber (313) and is in guiding cooperation with a wall of the first accommodation chamber (313), and a first sealing end (325) of the first valve core (32) enters the inner cavity of the liquid reservoir (10) through the valve port (311) of the first valve seat.

22. The water purifier according to claim 20, wherein the first valve assembly (30) further includes a first elastic member (33), the first elastic member (33) is arranged between an inner wall of the first valve seat (31) and the first valve core (32), so as to apply an elastic force toward the second direction (S) to the first valve core (32) continuously.

23. The water purifier according to claim 22, wherein an outer surface of the first valve core (32) is provided with at least one second step portion (34), and two ends of the first elastic member (33) press against the inner wall of the first valve seat (31) and the at least one second step portion (34), respectively.

24. The water purifier according to claim 5 or 6, wherein the second valve seat (51) includes a second valve seat body (512), the second valve seat body (512) is configured with a second accommodation chamber (513) with openings at both ends, an opening of the second accommodation chamber (513) away from the inner cavity of the liquid storage unit (20) forms the valve port (511) of the second valve seat;
the second valve core (52) passes through the second accommodation chamber (513) and is in guiding cooperation with a wall of the second accommodation chamber (513), and when a second sealing end (521) of the second valve core (52) moves along the first direction (F), the second sealing end (521) seals the valve port (511) of the second valve seat.

25. The water purifier according to claim 24, wherein an edge of the valve port (511) of the second valve seat is provided with a third flanging portion (514) that is folded inward, and the third flanging portion (514) is configured to stop and cooperate with the second sealing end (521) of the second valve core (52).

26. The water purifier according to claim 24, wherein the second valve assembly (50) further includes a second elastic member (53), the second elastic member (53) is arranged between an inner wall of the second valve seat (51) and the second sealing end (521) of the second valve core (52), so as to apply an elastic force toward the first direction (F) to the second valve core (52) continuously; preferably, an elastic coefficient of the second elastic member (53) is less than an elastic coefficient of the first elastic member (33).

27. The water purifier according to claim 24, wherein an outer wall of the liquid storage unit (20) is configured with a mounting chamber (91) in communication with the inner cavity of the liquid storage unit (20), and the second connector (60) is installed in the mounting chamber (91).

28. The water purifier according to claim 1, wherein the liquid reservoir (10) is a communicating vessel, and the liquid storage unit (20) is a clean water tank; or, the liquid reservoir (10) is a raw water tank base, and the liquid storage unit (20) is a raw water tank; or, the liquid reservoir (10) is a raw water tank, and the liquid storage unit (20) is a raw water tank base.

29. The water purifier according to claim 1, wherein the liquid reservoir (10) is a communicating vessel, and the liquid storage unit (20) is a clean water tank; the water purifier further includes: a filter and a water pump, the filter is in communication with the inner cavity of the communicating vessel, and the water pump draws water from the clean water tank through the communicating vessel;
the water purifier further includes a level box, the communicating vessel is in communication with the level box, and when the water pump draws water, the water in the level box and the clean water tank both decreases.

30. The water purifier according to claim 1, wherein the water purifier further includes a filter; the liquid reservoir (10) is a raw water tank base, and the liquid storage unit (20) is a raw water tank, and the raw water tank base is configured to provide raw water from the raw water tank to the filter.

31. A water purifier, comprising a liquid reservoir (10), a liquid storage unit (20), a first valve assembly (30), and a second valve assembly (50);
wherein the liquid reservoir (10) is provided with a first connecting tube (40) in communication with an inner cavity of the liquid reservoir (10); the liquid storage unit (20) is provided with a second connector (60) in communication with an inner cavity of the liquid storage unit (20);
the first valve assembly (30) includes a sealing ring (80) and a first valve core (32), and the first valve (32) reciprocates along a length direction of the first connecting tube (40) to open or close the inner cavity of the liquid reservoir (10), the second valve assembly (50) includes a second valve seat (51) and a second valve core (52) provided on the second valve seat (51), the second valve core (52) reciprocates along a length direction of the second connector (60) to open or close the inner cavity of the liquid storage unit (20);
one end of the sealing ring (80) is sealingly engaged with the first connecting tube (40), and the other end of the sealing ring (80) is provided with a mating portion (81), and the mating portion (81) is movably sleeved on a periphery of the first valve core (32).
a setting position of the second valve seat (51) corresponds to a setting position of the mating portion (81), a setting position of the second valve core (52) corresponds to a setting position of the first valve core (32), a state where the second connector (60) is located in the first connecting tube (40) and the second valve seat (51) just contacts the mating portion (81) is designated as an initial state, and in the initial state, there is a gap between the first valve core (32) and the second valve core (52), or the first valve core (32) and the second valve core (52) contact each other and do not transmit force to each other.

32. The water purifier according to claim 31, wherein the first valve assembly (30) further includes a first valve seat (31), the first valve core (32) is disposed through the first valve seat (31), the first valve seat (31) is connected to the first connecting tube (40), the first valve core (32) is movable relative to the first valve seat (31) along a first direction (F), or elastically resets along a second direction (S) opposite to the first direction (F), to open or close a valve port (311) of the first valve seat; and the first direction (F) is a direction in which the second connector (60) is inserted into the first connecting tube (40) and is parallel to a length direction of the first connecting tube (40).

33. The water purifier according to claim 32, wherein the second valve core (52) is movable relative to the second valve seat (51) toward the second direction (S), or elastically resets toward the first direction (F), to open or close a valve port (511) of the second valve seat.

34. The water purifier according to claim 32, wherein the mating portion (81) is in clearance fit with the first valve core (32).

35. The water purifier according to claim 34, wherein the first valve core (32) includes a first valve core body (322) and a plurality of first ribs (323), the plurality of first ribs (323) are arranged spaced apart and around a peripheral surface of the first valve core body (322), the mating portion (81) is configured as an annular member and is sleeved on an outer peripheral side of each first rib (323) and is in clearance fit with the outer peripheral side of each first rib (323), and an inner diameter of the mating portion (81) is less than 7 mm.

36. The water purifier according to claim 32, wherein the first connecting tube (40), the first valve core (32), and the sealing ring (80) together form an accommodating space (C);
the sealing ring (80) is configured as an elastic member, and the mating portion (81) is movable along the first direction under driving of the second valve seat (51), or elastically resets along the second direction, to reduce or increase a volume of the accommodating space (C).

37. The water purifier according to claim 32, wherein the sealing ring (80) includes an annular main body portion (82) and a necking portion (83), the necking portion (83) and the mating portion (81) are both disposed around an outer side of the first valve core (32), one end of the necking portion (83) is connected to the main body portion (82), and the other end of the necking portion (83) is connected to the mating portion (81).

38. The water purifier according to claim 37, wherein the necking portion (83) and the mating portion (81) are both located inside the main body portion (82); or
the main body portion (82), the necking portion (83), and the mating portion (81) are arranged in sequence along the second direction (S).

39. The water purifier according to claim 37, wherein an end of the main body portion (82) away from the necking portion (83) is provided with a first flanging portion (84) that is folded outward, a peripheral surface of the main body portion (82) presses against an inner wall of the first connecting tube (40), and the first flanging portion (84) is sleeved on an end of the first connecting tube (40) away from the liquid reservoir (10).

40. The water purifier according to claim 39, wherein the water purifier (100) further includes a housing (70), an end of the housing (70) is provided with a second flanging portion (72) that is folded inward, and the second flanging portion (72) presses the first flanging portion (84) tightly against the end of the first connecting tube (40) away from the liquid reservoir (10).

41. The water purifier according to claim 40, wherein an inner diameter of the mating portion (81) is less than or equal to an inner diameter of the second valve seat (51); and
projections of surfaces of the mating portion (81) and the second valve seat (51) that face each other on a plane perpendicular to the first direction (F) have an overlapping portion.

42. The water purifier according to claim 41, wherein an outer diameter of the second connector (60) is less than an inner diameter of the main body portion (82);
an annular protruding portion (821) is provided on an inner side of the main body portion (82), and when the second connector (60) is inserted into the first connecting tube (40), the protruding portion (821) presses against an outer wall of the second connector (60).

43. The water purifier according to claim 32, wherein surfaces of the mating portion (81) and the second valve seat (51) that face each other are designated as a first surface (811) and a second surface (812), respectively;
in the initial state, an end of the first valve core (32) away from the inner cavity of the liquid reservoir (10) protrudes beyond the first surface (811);
a spacing D1 between an end face of the first valve core (32) facing the second valve core (52) and the first surface (811) and a spacing D2 between an end face of the second valve core (52) facing the first valve core (32) and the second surface (812) satisfy: D1 < D2.

44. The water purifier according to claim 43, wherein an end face of the mating portion (81) away from the first surface (811) is designated as a third surface (813);
a first step portion (324) that is partially protruding is provided between two ends of the first valve core (32), and the first step portion (324) is configured to block a moving path of the mating portion (81) along the first direction (F);
the first step portion (324) includes a first step surface (3241) extending along a radial direction of the first valve core (32), and the first step surface (3241) is arranged opposite to the third surface (813);
a spacing D3 between the end face of the first valve core (32) facing the second valve core (52) and the first step surface (3241) and a thickness dimension D4 of the mating portion (81) along the first direction (F) satisfy: D3 > D4.

45. The water purifier according to any one of claims 32-44, wherein the first valve seat (31) includes a first valve seat body (312), the first valve seat body (312) is configured with a first accommodation chamber with openings at two ends, and the opening facing the inner cavity of the liquid reservoir (10) forms the valve port (311) of the first valve seat;
the first valve core (32) passes through the first accommodation chamber and is in guiding fit with a wall of the first accommodation chamber, and a first sealing end (325) of the first valve core (32) enters the inner cavity of the liquid reservoir (10) through the valve port (311) of the first valve seat.

46. The water purifier according to claim 45, wherein the first valve assembly (30) further includes a first elastic member (33), the first elastic member (33) is disposed between an inner wall of the first valve seat (31) and the first valve core (32), and is configured to always apply an elastic force toward the second direction (S) to the first valve core (32).

47. The water purifier according to claim 46, wherein an outer surface of the first valve core (32) is provided with at least one second step portion (34), and two ends of the first elastic member (33) press between the inner wall of the first valve seat (31) and the at least one second step portion (34), respectively.

48. The water purifier according to any one of claims 32-44, wherein the second valve seat (51) includes a second valve seat body (512), the second valve seat body (512) is configured with a second accommodation chamber with openings at two ends, and the opening away from the inner cavity of the liquid storage unit (20) forms the valve port (511) of the second valve seat;
the second valve core (52) passes through the second accommodation chamber and is in guiding fit with a wall of the second accommodation chamber, and a second sealing end (521) of the second valve core (52) blocks the valve port (511) of the second valve seat when moving along the first direction (F).

49. The water purifier according to claim 48, wherein the second valve assembly (50) further includes a second elastic member (53), the second elastic member (53) is disposed between an inner wall of the second valve seat (51) and the second sealing end (521) of the second valve core (52), and is configured to apply an elastic force toward the first direction (F) to the second valve core (52), continuously;
the first valve assembly (30) further includes a first elastic member (33), the first elastic member (33) is disposed between an inner wall of the first valve seat (31) and the first valve core (32), and is configured to apply an elastic force toward the second direction (S) to the first valve core (32), continuously;
an elastic coefficient of the second elastic member (53) is less than an elastic coefficient of the first elastic member (33).

50. The water purifier according to claim 48, wherein an outer wall of the liquid storage unit (20) is configured with a mounting chamber communicating with the inner cavity of the liquid storage unit (20), and the second connector (60) is installed in the mounting chamber.

51. The water purifier according to any one of claims 31-44, wherein the liquid reservoir (10) communicates with atmosphere, and a water level sensor for detecting a water level is provided in the liquid reservoir (10).

52. The water purifier according to any one of claims 31-44, wherein the first connecting tube (40), the first valve core (32), and the sealing ring (80) together form an accommodating space (C), and the accommodating space (C) communicates with the inner cavity of the liquid reservoir (10) when the first valve assembly (30) is open.

53. The water purifier according to claim 52, wherein a sealing member (321) is provided on the first valve core (32), and the sealing member (321) is configured to sealingly cooperate with the mating portion (81) to seal the accommodating space (C).

54. The water purifier according to claim 31, wherein the liquid reservoir (10) is a level box, and the liquid storage unit (20) is a clean water tank; or the liquid reservoir (10) is a raw water tank base, and the liquid storage unit (20) is a raw water tank; or the liquid reservoir (10) is a raw water tank, and the liquid storage unit (20) is a raw water tank base.

55. A water purifier, comprising:
a liquid reservoir (10), including a first connecting tube (40), a first valve assembly (30), and a sealing ring (80); wherein the first valve assembly (30) is installed on the first connecting tube (40); the first valve assembly (30) includes a first valve core (32), the first valve core (32) includes a first sealing end (325) and an opposite end arranged opposite to the first sealing end (325); one end of the sealing ring (80) is in sealing cooperation with the first connecting tube (40), the other end of the sealing ring (80) is provided with a mating portion (81), and the mating portion (81) is movably sleeved on a periphery of the opposite end;
a liquid storage unit (20), detachably installed on the liquid reservoir (10);
wherein the first valve core (32), the first connecting tube (40), and the sealing ring (80) together form an accommodating space (C); when the liquid storage unit (20) is not installed on the liquid reservoir (10), the mating portion (81) is located at the opposite end, the first valve assembly (30) is closed, the first sealing end (325) is closed, and the inner cavity of the liquid reservoir (10) is disconnected from the accommodating space (C).

56. The water purifier according to claim 55, wherein when the liquid storage unit (20) is installed on the liquid reservoir (10), the mating portion (81) is located between the opposite end and the first sealing end (325), the first valve assembly (30) is open, the first sealing end (325) is open, and the inner cavity of the liquid reservoir (10) communicates with the accommodating space (C).

57. The water purifier according to claim 55, wherein the liquid storage unit (20) is provided with a second connector (60) in communication with an inner cavity of the liquid storage unit (20), the first valve core (32) is configured to open or close the first valve assembly (30) while the second connector (60) is inserted into or pulled out of the first connecting tube (40); the water purifier further includes a second valve assembly (50) provided in the second connector (60);
the second valve assembly (50) includes a driving member (501), and when the second connector (60) is inserted into the first connecting tube (40), the driving member (501) presses against the mating portion (81) and drives the mating portion (81) to detach from the opposite end, so that the second connector (60) is in communication with the inner cavity of the liquid reservoir (10) through the accommodating space (C).

58. The water purifier according to claim 57, wherein the sealing ring (80) is configured as an elastic member, the mating portion (81) is movable along a first direction under driving of the driving member (501), or elastically resets along a second direction opposite to the first direction, to reduce or increase a volume of the accommodating space (C), and the first direction (F) is an insertion direction in which the second connector (60) is inserted into the first connecting tube (40).

59. The water purifier according to claim 57, wherein the second valve assembly (50) includes a second valve seat (51) and a second valve core (52) disposed through the second valve seat (51), the second valve seat (51) is connected inside the second connector (60), the second valve core (52) is movable relative to the second connector (60) toward a second direction (S), or elastically resets toward a first direction (F) opposite to the second direction (S), to open or close a valve port (511) of the second valve seat; the second valve seat (51) forms the driving member (501);
the second direction (S) is a withdrawal direction in which the second connector (60) is pulled out relative to the first connecting tube (40).

60. The water purifier according to claim 59, wherein a setting position of the second valve seat (51) corresponds to a setting position of the mating portion (81), a setting position of the second valve core (52) corresponds to a setting position of the first valve core (32), a state where the second connector (60) is located in the first connecting tube (40) and the second valve seat (51) just contacts the mating portion (81) is designated as an initial state, and in the initial state, there is a gap between the first valve core (32) and the second valve core (52), or the first valve core (32) and the second valve core (52) contact each other and do not transmit force to each other.

61. The water purifier according to claim 56, wherein a sealing member (321) is provided on the opposite end of the first valve core (32), and the sealing member (321) is configured to sealingly cooperate with the mating portion (81);
when the liquid storage unit (20) is not installed on the liquid reservoir (10), the second connector (60) is detached from the first connecting tube (40), and the sealing member (321) sealingly cooperates with the mating portion (81).

62. The water purifier according to claim 61, wherein the mating portion (81) is in clearance fit with the first valve core (32), and the sealing member (321) seals against an end surface of the mating portion (81) facing the second valve core (52).

63. The water purifier according to claim 62, wherein the first valve core (32) includes a first valve core body (322) and a plurality of first ribs (323); the plurality of first ribs (323) are arranged at intervals and around an outer peripheral surface of the first valve core body (322); and the sealing member (321) is provided at an end of the first valve core body (322) away from an inner cavity of the liquid reservoir (10) and is connected to each first rib (323).

64. The water purifier according to claim 63, wherein both the mating portion (81) and the sealing member (321) are configured as annular members.

65. The water purifier according to claim 64, wherein the sealing member (321) is configured as a disc-shaped structure, and an outer diameter of the sealing member (321) is greater than an inner diameter of the mating portion (81) to seal the accommodating space (C).

66. The water purifier according to claim 55, wherein the first valve core (32) includes a first valve core body (322) and a plurality of first ribs (323), and the plurality of first ribs (323) are arranged at intervals and around an outer peripheral surface of the first valve core body (322);
the mating portion (81) is configured as an annular member, is sleeved on an outer peripheral side of each first rib (323), and is in clearance fit with the outer peripheral side of each first rib (323); and an inner diameter of the mating portion (81) is less than 7 mm.

67. The water purifier according to claim 59, wherein the sealing ring (80) includes an annular main body portion (82) and a necking portion (83); both the necking portion (83) and the mating portion (81) are disposed around an outer side of the first valve core (32); one end of the necking portion (83) is connected to the main body portion (82), and the other end of the necking portion (83) is connected to the mating portion (81).

68. The water purifier according to claim 67, wherein both the necking portion (83) and the mating portion (81) are located on an inner side of the main body portion (82); or
the main body portion (82), the necking portion (83), and the mating portion (81) are arranged in sequence along the second direction (S).

69. The water purifier according to claim 67, wherein an end of the main body portion (82) away from the necking portion (83) is provided with a first flanging portion (84) that is folded outward; an outer peripheral surface of the main body portion (82) presses against an inner wall of the first connecting tube (40); and the first flanging portion (84) is sleeved on an end of the first connecting tube (40) away from the liquid reservoir (10).

70. The water purifier according to claim 69, wherein the water purifier (100) further includes a housing (70); the liquid reservoir (10) is connected to the housing (70); the housing (70) is provided with a connecting pipe (71) through which the first connecting tube (40) is inserted; an end of the connecting pipe (71) is provided with a second flanging portion (72) that is folded inward; and the second flanging portion (72) presses the first flanging portion (84) tightly against the end of the first connecting tube (40) away from the liquid reservoir (10).

71. The water purifier according to claim 67, wherein an inner diameter of the mating portion (81) is less than or equal to an inner diameter of the second valve seat (51); and
projections of surfaces of the mating portion (81) and the second valve seat (51) that face each other on a plane perpendicular to the first direction (F) have an overlapping portion.

72. The water purifier according to claim 71, wherein an annular protruding portion (821) is provided inside the main body portion (82); when the second connector (60) is inserted into the first connecting tube (40), the protruding portion (821) presses against an outer wall of the second connector (60); and when the second connector (60) is inserted into the first connecting tube (40), at least a part of the second connector (60) is located between the mating portion (81) and the main body portion (82).

73. The water purifier according to claim 60, wherein opposite surfaces of the mating portion (81) and the second valve seat (51) are designated as a first surface (811) and a second surface (812), respectively; in the initial state, an end of the first valve core (32) away from the inner cavity of the liquid reservoir (10) protrudes beyond the first surface (811); and a distance D1 between an end surface of the first valve core (32) facing the second valve core (52) and the first surface (811) and a distance D2 between an end surface of the second valve core (52) facing the first valve core (32) and the second surface (812) satisfy: D1 < D2.

74. The water purifier according to claim 73, wherein an end surface of the mating portion (81) away from the first surface (811) is designated as a third surface (813); a first step portion (324) that is partially protruding is provided between two ends of the first valve core (32), and the first step portion (324) is configured to block a moving path of the mating portion (81) along the first direction (F);
the first step portion (324) includes a first step surface (3241) extending radially along the first valve core (32), and the first step surface (3241) is arranged opposite to the third surface (813);
and a distance D3 between the end surface of the first valve core (32) facing the second valve core (52) and the first step surface (3241) and a thickness dimension D4 of the mating portion (81) along the first direction (F) satisfy: D3 > D4.

75. The water purifier according to claim 56, wherein the first valve assembly (30) further includes a first valve seat (31); the first valve core (32) is inserted through the first valve seat (31); the first valve seat (31) is connected to the first connecting tube (40); and the first valve core (32) is movable relative to the first valve seat (31) along a first direction (F), or is elastically reset along a second direction (S) opposite to the first direction (F), to open or close a valve port (311) of the first valve seat (31), the first direction (F) is an insertion direction in which the second connector (60) is inserted into the first connecting tube (40).

76. The water purifier according to claim 75, wherein the first valve seat (31) includes a first valve seat body (312); the first valve seat body (312) is configured with a first accommodation chamber (313) with openings at both ends, and the opening facing the inner cavity of the liquid reservoir (10) forms the valve port (311) of the first valve seat;
the first valve core (32) passes through the first accommodation chamber (313) and is in guiding cooperation with a wall of the first accommodation chamber (313), and a first sealing end (325) of the first valve core (32) enters the inner cavity of the liquid reservoir (10) through the valve port (311) of the first valve seat.

77. The water purifier according to claim 75, wherein the first valve assembly (30) further includes a first elastic member (33); the first elastic member (33) is disposed between an inner wall of the first valve seat (31) and the first valve core (32), and is configured to apply an elastic force in the second direction (S) to the first valve core (32), continuously.

78. The water purifier according to claim 77, wherein an outer surface of the first valve core (32) is provided with at least one second step portion (34), and two ends of the first elastic member (33) press between the inner wall of the first valve seat (31) and the at least one second step portion (34), respectively.

79. The water purifier according to claim 59, wherein the second valve seat (51) includes a second valve seat body (512); the second valve seat body (512) is configured with a second accommodation chamber (513) with openings at both ends, and the opening away from an inner cavity of the liquid storage unit (20) forms the valve port (511) of the second valve seat;
the second valve core (52) passes through the second accommodation chamber (513) and is in guiding cooperation with a wall of the second accommodation chamber (513), and a second sealing end (521) of the second valve core (52) seals the valve port (511) of the second valve seat when moving along the first direction (F).

80. The water purifier according to claim 79, wherein an edge of the valve port (511) of the second valve seat is provided with a third flanging portion (514) that is folded inward, and the third flanging portion (514) is configured to stop and cooperate with the second sealing end (521) of the second valve core (52).

81. The water purifier according to claim 79, wherein the second valve assembly (50) further includes a second elastic member (53); the second elastic member (53) is disposed between an inner wall of the second valve seat (51) and the second sealing end (521) of the second valve core (52), and is configured to apply an elastic force in the first direction (F) to the second valve core (52), continuously; preferably, an elastic coefficient of the second elastic member (53) is less than an elastic coefficient of the first elastic member (33).

82. The water purifier according to claim 79, wherein an outer wall of the liquid storage unit (20) is configured with a mounting chamber (91) in communication with the inner cavity of the liquid storage unit (20), and the second connector (60) is installed in the mounting chamber (91).
